(19) Europäisches Patentamt
European Patent Office
Office européen des brevets

(11) **EP 3 253 809 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **16700391.2**

(22) Anmeldetag: **05.01.2016**

(51) Int Cl.:
**C08F 236/12** (2006.01)    **B01D 1/24** (2006.01)

(86) Internationale Anmeldenummer:
**PCT/EP2016/050082**

(87) Internationale Veröffentlichungsnummer:
**WO 2016/124342 (11.08.2016 Gazette 2016/32)**

(54) **ZUSAMMENSETZUNGEN, ENTHALTEND NBR-BASIERTE MIKROGELE**

COMPOSITIONS CONTAINING NBR-BASED MICROGELS

COMPOSITIONS, COMPRENANT DES MICRO-GELS À BASE DE NBR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2015 EP 15153876**

(43) Veröffentlichungstag der Anmeldung:
**13.12.2017 Patentblatt 2017/50**

(73) Patentinhaber: **ARLANXEO Deutschland GmbH 41540 Dormagen (DE)**

(72) Erfinder:
• **SCHMIDT, Udo**
  **50735 Köln (DE)**
• **KOHL, Christopher**
  **55127 Mainz (DE)**
• **ZHOU, Jiawen**
  **40217 Düsseldorf (DE)**
• **FRÜH, Thomas**
  **42115 Wuppertal (DE)**

(74) Vertreter: **Wichmann, Birgid LANXESS Deutschland GmbH LEX-IPR Kennedyplatz 1 50569 Köln (DE)**

(56) Entgegenhaltungen:
**CN-A- 103 421 143    US-A1- 2006 079 609**

**Beschreibung**

Die vorliegende Erfindung betrifft feste Zusammensetzungen, enthaltend spezielle Copolymere mit kleinen Primärpartikeln in rieselfähiger Form, ihre jeweilige Herstellung sowie ihre jeweilige Verwendung insbesondere in duroplastischen Zusammensetzungen.

In US2006/0079609 wird die Verwendung von durch Emulsionspolymerisation erhaltenen, vernetzten Polymerpartikeln bei der Modifizierung von hitze-härtenden Epoxidharzen beschrieben. Als Aufarbeitungsmöglichkeit dieser Partikel wird ausschließlich Koagulation beschrieben. Wie im Folgenden noch beschrieben und im Beispielteil gezeigt, erfüllen Koagulate nicht die zur Lösung der Aufgabe nötigen Anforderungen.

CN103421143 beschreibt die Emulsionspolymerisation eines Kautschuks in einer Dispersion von anorganischen Partikeln und die anschließende Aufarbeitung durch Sprühtrocknung. Die Herstellung von vernetzten, funktionalen, formstabilen Polymerpartikeln wird nicht beschrieben, ebenso wenig eine Anwendung des erhaltenen Materials.

Der Einsatz von sogenannten Mikrogelen in duroplastischen Zusammensetzungen ist an sich bekannt und beispielsweise in EP1674501 beschrieben. Die dort beschriebenen Effekte beruhen auf einer besonderen Dispergierung der Mikrogele in den Vorstufen der Duroplastherstellung mittels eines Hochdruckhomogenisators. Beim Hochdruckhomogenisator handelt es sich um ein Gerät, das in seinem Homogenisierventil die in den Duroplastvorläufer eingemischten Agglomerate der Mikrogelpartikel in Aggregate und/oder Primärpartikel zerteilt. Agglomerate sind physikalisch trennbare Einheiten, bei deren Dispergierung keine Änderung der Primärpartikelgröße erfolgt. Das zu homogenisierende Produkt tritt in das Homogenisierventil mit langsamer Geschwindigkeit ein und wird im Homogenisierspalt auf hohe Geschwindigkeiten beschleunigt. Die Dispergierung erfolgt hinter dem Spalt hauptsächlich aufgrund von Turbulenzen und Kavitation (William D. Pandolfe, Peder Baekgaard, Marketing Bulletin der Fa. APV Homogeniser Group - "High-pressure homogenisers processes, product and applications").

Nachteilig am Hochdruckhomogenisator ist, dass es sich nicht um ein Gerät handelt, das standardmäßig zur Dispergierung von Elastomerpartikeln eingesetzt wird, und somit in der Branche nicht verbreitet ist. Des Weiteren erfolgt bei Durchtritt durch das Ventil eine starke Erwärmung des Materials mit hohen Temperaturspitzen, was die Gefahr der ungewollten Vernetzung sowie der Materialschädigung birgt. Da die vollständige Dispergierung mehrere Durchgänge durch den Homogenisator erfordert, steigt diese Gefahr nochmals an. Insgesamt erhöht sich durch den Einsatz des Hochdruckhomogenisators der apparative Aufwand sowie der Arbeits- und Zeitaufwand zur Herstellung von duroplastischen Zusammensetzungen drastisch.

Eine andere Form der Anwendung wird in der WO2009/098305 beschrieben. WO 2009098305 lehrt die Modifizierung von Polyamiden durch sprühgetrocknete Kautschukgele auf NBR-Basis, die durch Sprühtrocknung des Latex' erhalten werden. Der Partikeldurchmesser der dort beschriebenen Gele liegt allerdings bei 2 bis 300 $\mu$m. Nachteilig an den beschriebenen Partikeln ist ihr im Vergleich zu den erfindungsgemäßen Zusammensetzungen schlechteres Oberfläche-zu-Volumen-Verhältnis, woraus eine geringere Wirksamkeit bei gleicher Dosierung bezogen auf Gewichtsprozente resultiert. Das führt zu relativ hohen Einsatzmengen, um die gewünschten Effekte zu erhalten.

Zwar werden auch Mikrogele mit kleineren Primärpartikeln durch Emulsionspolymerisation beispielsweise in der oben erwähnten EP1674501 beschrieben, jedoch lassen sich die dort exemplarisch beschriebenen direkt vernetzten SBR-Typen nicht in einer geeigneten Form, bspw. als Sprühgranulate für ein leichtes Einarbeiten in das duroplastische Anwendungsmedium herstellen.

In WO2014/174068 werden NBR-basierte Mikrogele beschrieben, die mittels Extruder in PVC eingearbeitet werden. Sie liegen als koagulierte Klumpen bzw. in der einzig großtechnisch verfügbaren Form als gepresste Ballen vor und sind ebenso wenig wie die Mikrogele aus EP1674501 zur einfachen und kontinuierlichen Einarbeitung in Duroplasten geeignet. Auch erfüllen sie nicht die Anforderungen an die Rieselfähigkeit, die im Folgenden noch erläutert wird. Aufgabe war es nun, Additive bereitzustellen, die man in einfacher Weise in duroplastische Zusammensetzungen einarbeiten kann, insbesondere zur Verbesserung der Schlagzähigkeit.

Eine der Aufgaben der Erfindung war es, die Eigenschaften von Kunststoffen durch Beimischung von Mikrogelen so zu verbessern, dass Eigenschaften wie Schlagzähigkeit und Energieaufnahme bis zum Bruch verbessert werden, während gleichzeitig die restlichen Eigenschaften wie mechanische Festigkeit, Glasübergangstemperatur und E-Modul weitestgehend erhalten bleiben. Eine andere Aufgabe der vorliegenden Erfindung war es, Mikrogele bereitzustellen, die mit geringem apparativen Aufwand und hoher Effizienz in Kunststoffen dispergiert werden können. Ein geringer apparativer Aufwand bedeutet z.B., wenn der Einsatz eines Dissolvers, Vakuumdissolvers, eines Walzenstuhls, eines Extruders oder eines Innenmischers oder anderer in der Industrie verbreiteter Instrumente zur Mischungsherstellung ausreicht, um innerhalb üblicher Mischzeiten eine homogene Dispersion der Mikrogel-Partikel bis zu den Primärpartikeln hinab herzustellen. Hohe Effizienz wird erreicht, wenn das Material einfach und kontinuierlich dosiert werden kann, weil es beispielsweise in rieselfähiger Form vorliegt, wenig zur Verblockung neigt, eine hohe Schüttdichte und gute, einheitliche Qualität (keine Klümpchen, nicht klebrig, keine Verfärbungen) aufweist.

Die Erfindung betrifft partikuläre, bei 20 °C feste Zusammensetzungen, enthaltend wenigstens ein Copolymer auf Basis wenigstens folgender Comonomerer a) bis d)

a) konjugiertes Dien,

b) $\alpha,\beta$-ungesättigtes Nitril,

c) wenigstens ein polyfunktionelles radikalisch polymerisierbares Comonomer und

d) wenigstens ein Carboxy-, Hydroxy-, Epoxy- und/oder Aminogruppen funktionelles radikalisch polymerisierbares Comonomer,

welche einen durchschnittlichen Teilchendurchmesser der Primärteilchen von 5 bis 500 nm besitzen, und ggf. ein Trennmittel, dadurch gekennzeichnet, dass diese Zusammensetzung eine Rieselfähigkeit nach EN DIN 6186:1998 (Trichterdurchmesser 15 mm) von maximal 33 s aufweisen.

Das Copolymer der erfindungsgemäßen Zusammensetzung ist elastomer und wird nachfolgend auch als Mikrogel bezeichnet. Der Begriff "fest" im Sinne der vorliegenden Erfindung bedeutet vorzugsweise, dass die Zusammensetzung eine dynamische Viskosität von größer 1000 Pas bei 20 °C und 1 bar Normaldruck aufweist.

**Komponente a)**

Das konjugierte Dien der Komponente a) kann von jeder Natur sein. Bevorzugt werden $(C_4-C_6)$ konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

In einer bevorzugten Ausführungsform beträgt der Gehalt an Copolymer-Einheiten auf Basis von Butadien der Komponente a) 10 bis 98,5 Gew.-%, vorzugsweise 25 bis 85 Gew.-%, bezogen auf die Gesamtmenge aller Comonomer-Einheiten.

**Komponente b)**

Als $\alpha,\beta$-ungesättigtes Nitril kann jedes bekannte $\alpha,\beta$-ungesättigte Nitril eingesetzt werden, bevorzugt sind $(C_3-C_5)$-$\alpha,\beta$-ungesättigte Nitrile wie Acrylnitril, Methacrylnitril, Ethacrylnitril oder Mischungen davon. Besonders bevorzugt ist Acrylnitril.

In einer bevorzugten Ausführungsform beträgt der Gehalt an Copolymer-Einheiten auf Basis von Acrylnitril der Komponente b) 0,5 bis 60 Gew.-%, vorzugsweise 5 bis 55 Gew.-%, besonders bevorzugt 15 bis 50 Gew.-%, bezogen auf die Gesamtmenge aller Comonomer-Einheiten.

**Komponente c)**

In einer bevorzugten Ausführungsform beträgt der Gehalt an Copolymer-Einheiten auf Basis von Komponente c) 0,5 bis 10 Gew.-%, vorzugsweise 0,5 bis 8 Gew.-%, besonders bevorzugt 0,5 bis 5 Gew.-%, bezogen auf die Gesamtmenge aller Comonomer-Einheiten. Die Komponente c) ist verschieden von den Komponenten a), b) und d).

Das polyfunktionelle radikalisch polymerisierbare Comomoner der Komponente c) wird bevorzugt aus Monomeren ausgewählt, die zwei oder mehr funktionelle, radikalisch polymerisierbare Gruppen aufweisen, insbesondere zwei- oder mehrfach ungesättigte Monomere, insbesondere Verbindungen mit 2, 3 oder 4 polymerisierbaren C=C Doppelbindungen, wie insbesondere Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat, Acrylamide wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat sowie ganz besonders bevorzugt polyfunktionelle Acrylate, Methacrylate oder Itaconate von mehrwertigen $C_2$- bis $C_{10}$-Alkoholen, insbesondere Ethylenglykol, 1,2-Propandiol, 1,4-Butandiol, Hexandiol, Polyethylenglykol mit 2 bis 20, insbesondere 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Mischungen hiervon.

Bevorzugter werden die polyfunktionellen radikalisch polymerisierbaren Comonomere der Komponente c) ausgewählt aus: Divinylbenzol, Trimethylolpropantrimethacrylat (TMPTMA), Trimethylolpropantriacrylat, Ethylenglykoldimethacrylat, Ethylenglykoldiacrylat, Butandiol-1,4-di(meth)acrylat und Mischungen hiervon.

Die genannten polyfunktionellen radikalisch polymerisierbaren Monomere der Komponente c) dienen bei der Herstellung des Copolymeren der erfindungsgemäßen Zusammensetzung insbesondere der Vernetzung.

**Komponente d)**

In einer bevorzugten Ausführungsform beträgt der Gehalt an Copolymer-Einheiten auf Basis von Komponente d) 0,5 bis 20 Gew.-%, vorzugsweise 1 bis 15 Gew.-%, besonders bevorzugt 1 bis 10 Gew.-%, bezogen auf die Gesamtmenge aller Comonomer-Einheiten. Die Komponente d) ist verschieden von den Komponenten a) bis c).

Bevorzugte funktionalisierte Comonomere der Komponente d) sind Acrylsäure, Methacrylsäure, Maleinsäure, Fumarsäure, Itakonsäure, aminfunktionalisierte (Meth)acrylate wie primäre Amino-alkyl(meth)acrylsäureester, wie Aminoethyl(meth)acrylat, Aminopropyl(meth)acrylat und Amino-butyl(meth)acrylat, sekundäre Aminoalkyl(meth)acrylsäureester, insbesondere tert.-Butylamino $(C_2\text{-}C_4)$alkyl(meth)acrylat, Acrolein, N-Vinyl-2-pyrrolidon, N-Vinylimidazol, 2-Vinylpyridin, 4-Vinylpyridin, N-Allyl-Harnstoff und N-Allyl-Thioharnstoff, (Meth)acrylamide wie (Meth)acrylamid, einfach oder zweifach N-substituierte (Meth)acrylamide, hydroxyfunktionalisierte (Meth)acrylate wie Hydroxyethyl-methacrylat (HEMA), Hydroxypropyl(meth)acrylat, Hydroxybutyl(meth)acrylat, Polyethylenglykol(meth)acrylate wie Hydroxy- oder, Methoxypolyethylenglykol(meth)acrylat, Polypropylenglykol(meth)acrylate, Stearylmethacrylat, epoxy-funktionelle Monomere wie Glycidyl(meth)acrylat, Mono- oder Diester von $\alpha,\beta$-ungesättigten Dicarbonsäuren wie Alkyl-, bevorzugt $C_1\text{-}C_{10}$-Alkyl, insbesondere Ethyl-, n-Propyl-, iso-Propyl, n-Butyl-, tert.-Butyl-, n-Pentyl- oder n-Hexyl-, Alkoxyalkyl-, bevorzugt $C_2\text{-}C_{12}$ Alkoxyalkyl-, besonders bevorzugt $C_3\text{-}C_8$-Alkoxyalkyl-, Hydroxyalkyl-, bevorzugt $C_1\text{-}C_{12}$-Hydroxyalkyl-, besonders bevorzugt $C_2\text{-}C_8$-Hydroxyalkyl, Cycloalkyl-, bevorzugt $C_5\text{-}C_{12}$-Cycloalkyl-, besonders bevorzugt $C_6\text{-}C_{12}$-Cycloalkyl-, Alkylcycloalkyl-, bevorzugt $C_6\text{-}C_{12}$-Alkylcycloalkyl-, besonders bevorzugt $C_7\text{-}C_{10}$-Alkylcycloalkyl-, Aryl-, bevorzugt $C_6\text{-}C_{14}$-Aryl-mono- oder - diester, wobei es sich im Fall der Diester jeweils auch um gemischte Ester handeln kann und Mischungen hiervon.

**Weitere Monomere**

Weiterhin kann das Copolymer der erfindungsgemäßen Zusammensetzung 0 bis 20 Gew.-% weitere Struktureinheiten auf Basis von einem von den Komponenten a) bis d) verschiedenen radikalisch polymerisierbaren Monomeren e) enthalten. Bevorzugt wird das radikalisch polymerisierbare Monomer e) ausgewählt aus: Styrol, Isopren, 2-Chlorbutadien, 2,3-Dichlorbutadien, Estern der Acryl- und Methacrylsäure, wie Ethyl(meth)acrylat, Methyl(meth)acrylat, n-Propyl(meth)acrylat, n-Butyl(meth)acrylat, 2-Ethylhexyl(meth)acrylat, sowie Tetrafluorethylen, Vinylidenfluorid, Hexafluorpropen und Mischungen hiervon.

Bevorzugt handelt es sich bei dem Copolymer der erfindungsgemäßen Zusammensetzung um ein auf Basis von Butadien, Acrylnitril, Trimethylolpropantrimethacrylat (TMPTMA) und wenigstens einem Monomer ausgewählt aus der Gruppe von Hydroxyethylmethacrylat (HEMA), Acrylsäure, Methacrylsäure, Glycidylmethacrylat, Vinylpyridin, Vinylimidazol und Methacrylamid.

Das Copolymer der erfindungsgemäßen Zusammensetzung ist bevorzugt ein nicht durch energiereiche Strahlung vernetztes Mikrogel. Energiereiche Strahlung meint hier zweckmäßig elektromagnetische Strahlung einer Wellenlänge von weniger als $0{,}1\ \mu m$.

Die Primärpartikel des Mikrogels der erfindungsgemäßen Zusammensetzung weisen bevorzugt eine annähernd kugelförmige Geometrie auf. Als Primärpartikel nach DIN 53206:1992-08 werden die durch geeignete physikalische Verfahren (Elektronenmikroskop), als Individuen erkennbare, in der kohärenten Phase dispergierten Mikrogelteilchen bezeichnet (vgl. z.B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht eines Dünnschnitts mit einem Elektronenmikroskop erkennbar im Wesentlichen eine kreisförmige Fläche bilden. Dadurch unterscheiden sich die Mirkogele der erfindungsgemäßen Zusammensetzungen wesentlich von durch die "in-situ"-Verfahren erzeugten dispergierten Kautschuk-Phasen, die im allgemeinen eine irreguläre Form aufweisen. Die Mikrogelpartikel der erfindungsgemäßen Zusammensetzung behalten ihre aus dem separaten Herstellungsverfahren der Mikrogel-Kautschukphase resultierende, im wesentlichen einheitliche Kugelform beim Dispergieren während der Mischungsherstellung im Duroplasten praktisch ohne Veränderung bei. Durch die weiter unten beschriebenen Verfahren der Dispergierung kann die feine Teilchengrößenverteilung der Mikrogele im Mikrogellatex annähernd auf die Mischung übertragen werden, da bei der Bildung der Zusammensetzung praktisch keine Veränderung der Mikrogele und ihrer Partikelgrößenverteilung auftritt.

Die Primärpartikel des Mikrogels der erfindungsgemäßen Zusammensetzung weisen bevorzugt einen durchschnittlichen Teilchendurchmesser von 5 bis 500 nm, bevorzugter von 20 bis 400 nm, noch bevorzugter von 20 bis 300 nm, noch bevorzugter von 20 bis 250 nm, noch bevorzugter 20 bis 150 nm und noch bevorzugter 30 bis 90 nm auf.

Da sich der durchschnittliche Teilchendurchmesser der Primärpartikel der Mikrogele bei der Herstellung der Zusammensetzungen der Erfindung im wesentlich nicht verändert, entspricht der durchschnittliche Teilchendurchmesser der Primärpartikel der Mikrogele in der Zusammensetzung praktisch auch dem durchschnittlichen Teilchendurchmesser der Primärpartikel in der Dispersion des Anwendungsmediums, insbesondere des duroplastischen Kunststoffes bzw. einer Lösung davon, einer Lösung einer Mikrogel-Thermoplast-Mischung oder anderen gelösten Mischungen. Er kann an dafür geeigneten Dispersionen nach DIN 53206 durch Ultrazentrifugation bestimmt werden.

Im Latex des vorzugsweise durch Emulsionspolymerisation hergestellten Copolymeren kann die Größe der Primärpartikel auch näherungsweise durch dynamische Lichtstreuung an einer verdünnten Probe bestimmt werden. Üblich sind Laser, die bei 633 nm (rot) und bei 532 nm (grün) arbeiten. Bei der dynamischen Lichtstreuung erhält man einen Mittelwert der Partikelgrößenverteilungskurve.

Der mittlere Durchmesser der vorzugsweise durch Emulsionspolymerisation hergestellten Mikrogele kann mit hoher Genauigkeit beispielsweise auf 0,1 $\mu$m (100 nm) +/- 0,01 $\mu$m (10 nm) eingestellt werden, so dass beispielsweise eine Teilchengrößenverteilung erreicht wird, bei der mindestens 75 % aller Mikrogel-Partikel zwischen 0,095 $\mu$m und 0,105 $\mu$m groß sind. Andere mittlere Durchmesser der Mikrogele insbesondere im Bereich zwischen 5 bis 500 nm lassen sich mit gleicher Genauigkeit (mindestens 75 Gew.-% aller Teilchen liegen um das Maximum der integrierten Korngrößenverteilungskurve (bestimmt durch Ultrazentrifugation) in einem Bereich von + 10 % oberhalb und unterhalb des Maximums) herstellen und einsetzen. Dadurch kann die Morphologie der Mikrogele der erfindungsgemäßen Zusammensetzung praktisch genau eingestellt werden.

Die Mikrogele der erfindungsgemäßen Zusammensetzung weisen vorzugsweise in Toluol bei 23 °C unlösliche Anteile (Gelgehalt) von mindestens etwa 70 Gew.-%, bevorzugter mindestens etwa 80 Gew.-%, noch bevorzugter mindestens etwa 90 Gew.-% auf. Der Gelgehalt wird in Toluol bei 23 °C bestimmt. Hierzu werden 250 mg des Mikrogels in 25 mL Toluol 24 Stunden unter Schütteln bei 23 °C gequollen. Durch Zentrifugation mit 20.000 Upm wird der unlösliche Anteil abgetrennt und getrocknet. Der Gelgehalt ergibt sich aus dem Quotienten des getrockneten Rückstandes und der Einwaage und wird in Prozent angegeben.

Die Mikrogele der erfindungsgemäßen Zusammensetzung weisen vorzugsweise in Toluol bei 23 °C einen Quellungsindex von weniger als etwa 80, bevorzugter von weniger als 60, noch bevorzugter von weniger als 40 auf. So können die Quellungsindizes der Mikrogele (Qi) besonders bevorzugt zwischen 1-15 und 1-10 liegen. Der Quellungsindex wird aus dem Gewicht des in Toluol bei 23 °C für 24 Stunden gequollenen lösungsmittelhaltigen Mikrogels (nach Zentrifugation mit 20.000 Upm) und dem Gewicht des trockenen Mikrogels berechnet:

$$Qi = \text{Nassgewicht des Mikrogels/Trockengewicht des Mikrogels}$$

Zur Ermittlung des Quellungsindex lässt man genauer 250 mg des Mikrogels in 25 ml Toluol 24 h unter Schütteln quellen. Das Gel wird abzentrifugiert, feucht gewogen und anschließend bei 70 °C bis zur Gewichtskonstanz getrocknet und nochmals gewogen.

Die Mikrogele der erfindungsgemäßen Zusammensetzung weisen vorzugsweise Glastemperaturen Tg von -100 °C bis +120 °C, bevorzugter von -100 °C bis +50 °C, noch bevorzugter von -80 °C bis +20 °C, noch bevorzugter von -50 °C bis +15 °C, besonders - 50 °C bis 10 °C, insbesondere -50 °C bis 0 °C auf.

Die Mikrogele der erfindungsgemäßen Zusammensetzung weisen vorzugsweise eine Breite des Glasübergangs von größer als 5 °C, bevorzugt größer als 10°C, bevorzugter größer als 15 °C auf. Mikrogele, die eine solche Breite des Glasübergangs aufweisen, sind in der Regel - im Gegensatz zu vollständig homogen strahlenvernetzten Mikrogelen - nicht vollständig homogen vernetzt.

Die Bestimmung der Glastemperatur und der Breite des Glasübergangs ($\Delta$Tg) der Mikrogele erfolgt mittels Differential-Scanning-Calorimetry (DSC). Für die Bestimmung von Tg und $\Delta$Tg werden zwei Abkühl-/Aufheiz-Zyklen durchgeführt. Tg und $\Delta$Tg werden im zweiten Aufheiz-Zyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100 °C abgekühlt und dann mit einer Geschwindigkeit von 20 K/min auf +150 °C aufgeheizt wird. Der zweite DSC-Zyklus wird durch sofortige Abkühlung der Probe begonnen, sobald eine Probentemperatur von +150 °C erreicht ist. Die Abkühlung erfolgt mit einer Geschwindigkeit von ungefähr 320 K/min. Im zweiten Aufheizzyklus wird die Probe wie im ersten Zyklus noch einmal auf +150 °C aufgeheizt. Die Aufheizgeschwindigkeit im zweiten Zyklus ist erneut 20 K/min. Tg und $\Delta$Tg werden graphisch an der DSC-Kurve des zweiten Aufheizvorgangs bestimmt. Für diesen Zweck werden an die DSC-Kurve drei Geraden angelegt. Die 1.Gerade wird am Kurventeil der DSC-Kurve unterhalb Tg, die 2.Gerade an dem durch Tg verlaufenden Kurvenast mit Wendepunkt und die 3.Gerade an den Kurvenast der DSC-Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glas-übergangs $\Delta$Tg erhält man aus der Differenz der beiden Temperaturen.

Der Hydroxylgruppengehalt der Mikrogele der erfindungsgemäßen Zusammensetzung kann durch Umsetzung mit Acetanydrid und Titration der hierbei frei werdenden Essigsäure mit KOH nach DIN 53240 als Hydroxylzahl mit der Dimension mg KOH/g Polymer bestimmt werden. Die Hydroxylzahl der Mikrogele der erfindungsgemäßen Zusammensetzung liegt bevorzugt bei 0,1 bis 100, noch bevorzugter bei 0,5 bis 50 mg KOH/g Polymer.

Im Rahmen der Hydroxylzahl-Bestimmung kann ebenfalls die Säurezahl der Mikrogele bestimmt werden. Hierzu wird das Probenmaterial nicht mit Acetanhydrid umgesetzt, sondern direkt mit KOH-Lösung titriert, wonach man in der Dimension mg KOH/g Polymer die Säurezahl erhält. Bevorzugt liegt die Säurezahl der Mikrogele der erfindungsgemäßen Zusammensetzung zwischen 4 und 100, noch bevorzugter zwischen 5 und 50 mg KOH/g Polymer, insbesondere von 7,5 bis 40 mg KOH/g Polymer.

Der Anteil an Trennmittel an der Gesamtmasse der erfindungsgemäßen Zusammensetzung beträgt bevorzugt 0 - 20, bevorzugter 0 - 15, noch bevorzugter 1 - 10 %. Die erfindungsgemäßen Zusammensetzungen besitzen vorzugsweise eine Schüttdichte von 160 bis 600 g/L.

**Verfahren**

Die Erfindung betrifft auch ein Verfahren zur Herstellung der erfindungsgemäßen festen Zusammensetzungen, dadurch gekennzeichnet, dass man wenigstens die Komponenten a) bis d) einer Emulsionspolymerisation unterwirft und anschließend ggf. nach Zugabe eines Trennmittels sprühtrocknet.

Die Emulsionspolymerisation wird vorzugsweise bis zu Umsätzen ≥ 70 mol-%, bevorzugt ≥ 80 mol-%, noch bevorzugter ≥ 90 mol-% bezogen auf die Gesamtmenge der eingesetzten Monomere geführt. Bei Erreichung von Umsätzen im Bereich von ≥ 70 bis 100 %, vorzugsweise im Bereich von ≥ 80 bis 100 %, insbesondere im Bereich von ≥ 90 bis 100 % wird die Polymerisation im Allgemeinen abgestoppt.

Die Polymerisationstemperatur liegt im Allgemeinen im Bereich von ≥ 5 bis 100 °C, bevorzugt bei ≥ 5 bis 90 °C, insbesondere von 8 bis 80 °C.

**Emulgatoren:**

Emulsionspolymerisationen werden im Allgemeinen unter Einsatz von Emulgatoren durchgeführt. Hierfür sind dem Fachmann eine große Bandbreite von Emulgatoren bekannt und zugänglich. Als Emulgatoren können beispielsweise anionische Emulgatoren oder auch neutrale Emulgatoren eingesetzt werden. Bevorzugt werden anionische Emulgatoren eingesetzt, besonders bevorzugt in Form wasserlöslicher Salze.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Laevopimarsäure enthalten. Eine besonders bevorzugte modifizierte Harzsäure ist die disproportionierte Harzsäure (Ullmann´ s Encyclopedia of Industrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erd- nussöl, Leinsamenöl, Kokosnussfett, Palmkernöl, Olivenöl, Rapsöl, Sojabohnenöl, Fischöl und Rindertalg etc. (Ullmann´ s Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium- Natrium, Kalium und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methylenverbrückte Aromaten infrage, wobei die methylen-verbrückten und kondensierten Aromaten zusätzlich alkyliert sein können. Die Länge der Alkyl- ketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na- Alkylarylsulfonat, Na-Salze methylenverbrückter Arylsulfonate, Na-Salze alkylierter Naphthalin-sulfonate sowie die Na-Salze methylenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laurylsulfat, Na- Alkylsulfonatgemische mit 12 bis 18 C-Atomen, Na-Alkylarylsulfonate, Na-Diisobutylennaphthalin-sulfonat, methylenverbrückte Polynaphthalinsulfonatgemische sowie methylenverbrückte Aryl-sulfonatgemische.

Neutrale Emulgatoren leiten sich vorzugsweise von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsulfonat, $\alpha$-Olefin-Sulfonate sowie alkylierte und methylenverbrückte Naphthalin-sulfonsäuren.

Die Emulgatoren werden vorzugsweise in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird im Allgemeinen unter Verwendung der genannten Emulgatoren durchgeführt. Falls nach Abschluss der Polymerisation Latices erhalten werden, die aufgrund einer gewissen Instabilität zur vorzeitigen Selbstkoagulation neigen, können die genannten Emulgatoren auch noch zur Nachstabilisierung der Latices zugesetzt werden. Dies kann insbesondere vor der Entfernung nicht umgesetzter Monomerer durch Behandlung mit Wasserdampf sowie vor einer Latexlagerung oder vor der Durchführung der Sprühtrocknung notwendig werden.

**Molekulargewichtsregler:**

Die Emulsionspolymerisation wird bevorzugt so durchgeführt, dass insbesondere die Mikrogele der erfindungsgemäßen Zusammensetzung während der Polymerisation vernetzen. Daher ist die Verwendung von Molgewichtsreglern im Allgemeinen nicht notwendig. Es können aber trotzdem Molekulargewichtsregler eingesetzt werden. Der Regler wird dann üblicherweise in einer Menge von 0,01 bis 3,5 Gew.-Teilen, bevorzugt von 0,05 bis 2,5 Gew.- Teilen auf 100 Gew.-Teile der Monomermischung eingesetzt. Als Molekulargewichtsregler können beispielsweise mercaptanhaltige Carbonsäuren, mercaptanhaltige Alkohole, Xanthogendisulfide, Thiuramdisulfide, halogenierte Kohlenwasserstoffe, verzweigte aromatische oder aliphatische Kohlenwasserstoffe sowie auch lineare oder verzweigte Mercaptane eingesetzt werden. Diese Verbindungen weisen üblicherweise 1 bis 20 Kohlenstoffatome auf (siehe Rubber Chemistry and Technology (1976), 49(3), 610-49 (Üraneck, C. A.): "Molecular weight control of elastomers prepared by emulsion polymerization" und D. C. Blackley, Emulsion Polymerization, Theory and Practice, Applied Science Publishers Ltd London, 1975, S. 329-381).

Beispiele für mercaptanhaltige Alkohole und mercaptanhaltige Carbonsäuren sind Monothioethylenglycol und Mercaptopropionsäure.

Beispiele für Xanthogendisulfide sind Dimethylxanthogendisulfid, Diethylxanthogendisulfid und Diisopropylxanthogendisulfid.

Beispiele für Thiuramdisulfide sind Tetramethylthiuramdisulfid, Tetraethylthiuramdisulfid und Tetrabutylthiuramdisulfid.

Beispiele für halogenierte Kohlenwasserstoffe sind Tetrachlorkohlenstoff, Chloroform, Methyliodid, Diiodmethan, Difluorodiiodomethan, 1,4-Diiodobutan, 1,6-Diiodohexan, Ethylbromid, Ethyliodid, 1,2-Dibromotetrafluorethan, Bromtrifluorethen, Bromdifluorethen.

Beispiele für verzweigte Kohlenwasserstoffe sind diejenigen, von denen leicht ein H-Radikal abgespaltet werden kann. Beispiele hierfür sind Toluol, Ethylbenzol, Cumol, Pentaphenylethan, Triphenylmethan, 2,4-Diphenyl, 4-Methyl-l-Penten, Dipenten sowie Terpene wie z.B. Limonen, $\alpha$-Pinen, beta-Pinen, $\alpha$-Carotin und beta-Carotin.

Beispiele für lineare oder verzweigte Mercaptane sind n-Hexylmercaptan oder auch Mercaptane, die 9-16 Kohlenstoffatome und mindestens drei tertiäre Kohlenstoffatomen enthalten, wobei der Schwefel an eines dieser tertiären Kohlenstoffatome gebunden ist. Diese Mercaptane können entweder einzeln oder in Gemischen verwendet werden. Geeignet sind beispielsweise die Additionsverbindungen von Schwefelwasserstoff an oligomerisiertes Propen, insbesondere tetrameres Propen, oder an oligomerisiertes Isobuten, insbesondere trimeres Isobuten, die in der Literatur häufig als tertiäres Dodecylmercaptan ("t-DDM") bezeichnet werden.

Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar (siehe z.B. z.B. JP 07-316126, JP 07-316127 und JP 07-316128 sowie GB 823,823 und GB 823,824.)

Die einzelnen Alkylthiole bzw. deren Gemische werden üblicherweise in einer Menge von 0,05 bis 3 Gew.-Teilen, vorzugsweise von 0,1 bis 1,5 Gew.-Teilen bezogen auf 100 Gew.-Teile der Monomermischung eingesetzt.

Die Dosierung des Molekulargewichtsreglers bzw. der Molekulargewichtsreglermischung erfolgt entweder zu Beginn der Polymerisation oder aber portionsweise im Verlauf der Polymerisation, wobei die portionsweise Zugabe sämtlicher oder einzelner Komponenten der Reglermischung während der Polymerisation bevorzugt ist.

**Initiatoren:**

Zur Initiierung der Emulsionspolymerisation werden typischerweise Polymerisationsinitiatoren eingesetzt, die in Radikale zerfallen (radikalische Polymerisationsinitiatoren). Hierzu gehören Verbindungen, die eine -O-O- Einheit (Peroxo-Verbindungen) oder eine -N=N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cu- molhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azo-bisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalze, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylen-diaminotetraacetat, Natrium-Nitrilotriacetat sowie Trinatriumphosphat oder Tetrakalium-diphosphat.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit ($Na_2S_2O_5$), 3) p-Menthanhydroperoxid / Natriumformaldehydsulfoxylat in Kombination mit Fe(II)Sulfat ($FeSO_4$ x 7 $H_2O$), Natrium-Ethylendiaminoacetat und Trinatriumphosphat; 4) Cumolhydroperoxid / Natriumformaldehydsulfoxylat in Kombination mit Fe(II)-Sulfat ($FeSO_4$ x 7 $H_2O$), Natrium- Ethylendiaminoacetat und Tetrakaliumdiphosphat.

Die Menge an Oxidationsmittel beträgt bevorzugt 0,001 bis 1 Gew.-Teile, insbesondere 0,001 bis 0,09 Gew.-Teile, bezogen auf 100 Gew.-Teile Monomer. Die molare Menge an Reduktionsmittel liegt zwischen 50 % bis 500 % bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktions-geschwindigkeit steuern.

Die Polymerisationszeit liegt im Allgemeinen im Bereich von 5 h bis 30 h und hängt im Wesentlichen vom Acrylnitrilgehalt der Monomermischung, vom Aktivatorsystem und von der Polymerisationstemperatur ab.

Bei der Polymerisation werden möglichst hohe Polymerisationsumsätze angestrebt, um das Copolymer zu vernetzen. Aus diesem Grund kann auf die Verwendung von Stoppern verzichtet werden. Werden trotzdem Stopper verwendet, so eignen sich beispielsweise Dimethyldi-thiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-naphthylamin und aromatische Phenole wie tert-Butylbrenzkatechol, oder Phenothiazin.

Die bei der Emulsionspolymerisation verwendete Wassermenge liegt im Bereich von 70 bis 300 Gew. - Teilen, bevorzugt im Bereich von 80 bis 250 Gew. - Teilen, besonders bevorzugt im Bereich von 90 bis 200 Gew. -Teilen Wasser bezogen auf 100 Gew. -Teile der Monomermischung.

Zur Reduktion der Viskosität während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat, Natriumchlorid und Kaliumchlorid. Die Mengen dieser Elektrolyte liegen im Bereich von 0 bis 1 Gew. -Teile, vorzugsweise 0 bis 0,5 Gew. -Teile, bezogen auf 100 Gew.-Teile der Monomermischung.

Die Polymerisation kann entweder diskontinuierlich oder auch kontinuierlich in einer Rührkessel-kaskade durchgeführt werden.

Zur Erzielung eines gleichmäßigen Polymerisationsverlaufs wird für den Start der Polymerisation vorzugsweise nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegt. Vorzugsweise ist eine Nachdosierung bei NBR-Typen mit Acrylnitrilgehalten von 10 bis 34 sowie bei den Typen mit 40 bis 50 Gew.-% Acrylnitril (W. Hofmann, Rubber Chem. Technol. 36 (1963) 1) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70 bis 150 °C angewandt, wobei bei Temperaturen <100 °C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew.-%, vorzugsweise 0,5 bis 2,0 Gew.-%, bezogen auf 100 Gew.-Teile Copolymer der erfindungsgemäßen Zusammensetzung.

Die Aufarbeitung der nach der Emulsionspolymerisation hergestellten Mikrogele erfolgt durch Sprühtrocknung, wobei diese ebenfalls bevorzugt in Anwesenheit von Trennmitteln erfolgt.

Vor oder während der Aufarbeitung können dem Latex ein oder mehrere Alterungsschutzmittel zugesetzt werden. Hierfür eignen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-butylphenol, 2,6-Di-tert-butyl-p-kresol (BHT), 2,6-Di-tert.-butyl-4-ethylphenol, 2,2'-Methylenbis(6-tert.-butyl)-p-kresol, Poly(dicyclopentadien-co-p-kresol), estergruppenhaltige sterisch gehinderte Phenole wie n-Octadecyl-β-(4-hydroxy-3,5-di-tert-butyl-phenyl)-propionat, thioetherhaltige sterisch gehinderte Phenole, 2,2'-Methylenbis-(4-methyl-6-tert-butylphenol) (BPH), 2-Methyl-4,6-bis(octylsulfanylmethyl)phenol sowie sterisch gehinderte Thiobisphenole. In besonders geeigneten Ausführungsformen werden auch zwei oder mehr Alterungsschutzmittel zugesetzt, wie z.B. eine Mischung aus n-Octadecyl-β-(4-hydroxy-3,5-di-tert-butyl-phenyl)-propionat, Poly(dicyclopentadien-co-p-kresol) und 2-Methyl-4,6-bis(octylsulfanyl-methyl)-phenol.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis eingesetzt. Beispiele für Phenylendiamine sind N-Isopropyl-N'-phenyl-p-phenylendiamin, N-1,3-Dimethylbutyl-N'-phenyl-p-phenylendiamin (6PPD), N-1,4-Dimethylpentyl-N'-phenyl-p-phenylendiamin (7PPD) oder N,N'-bis-1,4-(1,4-Dimethylpentyl)-p-phenylendiamin (77PD).

Zu den sonstigen Alterungsschutzmitteln gehören Phosphite wie Tris(nonylphenyl)phosphit, polymerisiertes 2,2,4-Trimethyl-1,2-dihydrochinolin (TMQ), 2-Mercaptobenzimidazol (MBI), Methyl-2-mercaptobenzimidazol (MMBI), Zinkmethylmercaptobenzimidazol (ZMMBI). Die Phosphite werden im Allgemeinen in Kombination mit phenolischen Alterungsschutzmitteln eingesetzt. TMQ, MBI und MMBI werden vor allem für NBR-Typen verwendet, die peroxidisch vulkanisiert werden.

Die Sprühtrocknung der Latices aus der Emulsionspolymerisation erfolgt im Allgemeinen in üblichen Sprühtürmen. Dabei wird der bevorzugt auf 15 bis 100 °C erwärmte Latex über Pumpen in den Sprühturm befördert und über beispielsweise im Kopf des Turms befindliche Düsen bevorzugt bei Drücken von 50 bis 500 bar, vorzugsweise 100 bis 300 bar versprüht. Heißluft mit einer Eintrittstemperatur von bevorzugt 100 bis 350 °C wird beispielsweise im Gegenstrom zugeführt und verdampft das Wasser. Das Pulver sinkt nach unten und das trockene Pulver wird am Fuß des Turmes ausgeschleust. Gegebenenfalls verwendete Trennmittel und andere Additive wie zum Beispiel Alterungsschutzmittel, Antioxidantien, optische Aufheller etc. werden bevorzugt als trockene Pulver ebenfalls am Kopf des Turmes eingeblasen. Sie können auch teilweise oder vollständig dem Latex vor der Sprühtrocknung zugemischt werden. Die dem Sprühturm zugeführten Latices weisen bevorzugt Feststoffkonzentrationen von 10 bis 60, bevorzugter 20 bis 50 Gew.-%, noch bevorzugter 30 bis 50 Gew.-% bezogen auf den Latex auf. Durch diese Art der Aufarbeitung werden insbesondere sphärische oder nahezu sphärische Mikrogelpartikelagglomerate erhalten. Die erfindungsgemäßen festen Zusammensetzungen liegen vorzugsweise in Form von Agglomeraten der Primärpartikel mit einem mittleren Teilchendurchmesser von 2 bis 2000 μm, vorzugsweise 2 bis 500 μm, insbesondere von 5 bis 200 μm vor.

Bei der Aufarbeitung des Latex durch Sprühtrocknung können bevorzugt zusätzlich auch handelsübliche Trennmittel zugesetzt werden. Vorzugsweise werden die Trennmittel ausgewählt aus Kieselsäuren, insbesondere mit einer spezifischen Oberfläche nach BET von mehr als 5 m$^2$/g, die auch chemisch modifiziert, insbesondere hydrophobisiert, sein können, Calciumcarbonat, Magnesiumcarbonat, Silikaten wie Talk und Glimmer, Fettsäuresalzen, insbesondere Alkali- und Erdalkalimetallsalzen wie Salzen von Fettsäuren mit mehr als 10 Kohlenstoffatomen wie insbesondere Calcium- und Magnesiumsalze derartiger Fettsäuren wie Calciumstearat, Magnesiumstearat und Aluminiumzinkstearat, Calciumphosphat, Aluminiumoxid, Bariumsulfat, Zinkoxid, Titandioxid, Polymeren mit hoher Glastemperatur, beispielsweise von mehr als 60 °C wie Polyester, Polyolefine, Polyvinylchlorid und Stärke, hydrophilen Polymeren wie Polyvinylalkohol, Polyalkylenoxidverbindungen, insbesondere Polyethylenoxidverbindungen wie Polyethylenglykole oder Polyethylenglykolether, Polyacrylsäure, Polyvinylpyrrolidon und Zellulosederivaten, Fluorkohlenwasserstoffpolymeren und Mischungen der genannten Trennmittel.

Wenn Trennmittel eingesetzt werden, werden diese besonders bevorzugt aus der Gruppe Kieselsäure, Calciumcarbonat, Silikat und Fettsäuresalze ausgewählt und bei der Aufarbeitung der Mikrogele nach der Emulsionspolymerisation zugesetzt. Das Mikrogel kann aber auch ohne Zusatz eines separaten Trennmittels in die gewünschte, vorteilhafte Einsatzform überführt werden.

Bevorzugt werden die Sprühgranulate durch Sprühtrocknung der aus der Emulsionspolymerisation erhaltenen Latices ggf. unter Einsatz von Trennmitteln wie oben beschrieben erhalten.

Die Erfindung betrifft auch die Verwendung der erfindungsgemäßen festen Zusammensetzung als Additiv in Duroplast-Zusammensetzungen, vorzugsweise zur Erhöhung von Zähigkeit und Energieaufnahme bis zum Bruch.

**Duroplastische Zusammensetzungen**

Die Erfindung betrifft weiterhin duroplastische Zusammensetzungen enthaltend wenigstens

A) eine erfindungsgemäße feste Zusammensetzung und

B) einen duroplastischen Kunststoff.

In der erfindungsgemäßen duroplastische Zusammensetzung beträgt das Gewichtsverhältnis des duroplastischen Kunststoffs B) zu der erfindungsgemäßen festen Zusammensetzung A) vorzugsweise 0,5:99,5 bis 99,5:0,5, bevorzugt 2:98 bis 98:2, bevorzugter von 2:98 bis 15:85.

**Duroplastischer Kunststoff**

Die duroplastischen Kunststoffe der Komponente B) sind vorzugsweise Duromere, auch Duroplaste genannt. Duromere sind vorzugsweise engmaschig vernetzte Polymere mit dreidimensionalem Aufbau, die durch die dauerhafte, chemische Verknüpfung zwischen den Komponenten unlöslich und unschmelzbar geworden sind. Üblicherweise werden die Duroplaste durch das Zusammengeben von mindestens zwei reaktionsfähigen, höherfunktionellen Komponenten hergestellt; die Funktionalität der Reaktanden ist typischerweise $\geq$ 2. Im Anschluss an die Durchmischung der Komponenten gibt man die Mischung der Duromerkomponenten in eine Form oder zwischen Fügeteile und lässt das Gemisch aushärten, oft unter Einfluss von Hitze und/oder energiereicher Strahlung.

Der duroplastische Kunststoff B) in der duroplastischen Zusammensetzung der Erfindung wird bevorzugt ausgewählt aus der Gruppe, die besteht aus Polykondensationsduroplasten, Polyadditionsduroplasten und Polymerisationsduroplasten. Bekannte Beispiele für Duroplaste sind Harze/Klebstoffe wie Phenolharze, insbesondere Phenol-Formaldehyd-Harze, Aminoharze, insbesondere Melamin-Formaldehyd-Harze, Epoxid-Harze, ungesättigte Polyester-Harze, Acryl-Harze, RIM-Polyurethansysteme, PU-Harze und -Schäume, Epoxid-Klebstoffe, PU-Klebstoffe, UP-Klebstoffe, Cyanacrylat- und Methacrylat-Klebstoffe, Silikon-Harze und -Klebstoffe, silanvernetzende Harze und Klebstoffe, Furanharze, Polyimide, Harze und Klebstoffe aus ungesättigten Polyestern, Vinyl- bzw. Acrylestern, etc.

Bevorzugt werden die duroplastischen Kunststoffe, d.h. Harze und Klebstoffe, ausgewählt aus der Gruppe, die besteht aus Diallylphthalat-Harzen, Epoxidharzen, Aminoplasten wie Harnstoff-Formaldehyd-Harzen, Melamin-Formaldehyd-Harzen, Melamin-/Phenol-Formaldehyd-Harzen, Phenoplasten wie Melamin-Phenol-Formaldehyd-Harzen, Phenol-Formaldehyd-Harzen, Kresol-Formaldehyd-Harzen, Resorcin-Formaldehyd-Harzen, Xylenol-Formaldehyd-Harzen, Furfurylalkohol-Formaldehyd-Harzen, Ungesättigten Polyesterharzen, Polyurethan-Harzen, reaktionsspritzgegossene Polyurethan-Harze (RIM-PU), Furanharzen, Vinylesterharzen, Polyester-Melamin-Harze, Gemische von Diallylphthalat- oder Diallylisophthalat-Harzen.

Besonders bevorzugt sind PU-, RIM-PU-, Amino- und Phenoplast-, Epoxy- und UP-Systeme. Solche duroplastischen Kunststoffe sind an sich bekannt und bezüglich ihrer Herstellung kann beispielsweise verwiesen werden auf Saechtling, Kunststoff Taschenbuch, 28. Auflage, Kapitel 4.17; Ullmann's Encyclopedia of Industrial Chemistry, 5. Auflage, Band A26, Seite 665 ff.; Ullmann ibid. Band 9, Seite 547 ff., Elias, Makromoleküle, Band 2, Technologie, 5. Auflage, Kapitel 15.6.

Die Herstellung der erfindungsgemäßen duroplastischen Zusammensetzung, erfolgt vorzugsweise durch Mischen der Komponenten A) und B).

Bevorzugt enthalten die erfindungsgemäßen duroplastischen Zusammensetzungen ein oder mehrere Kunststoffadditive, die bevorzugt aus der Gruppe ausgewählt werden, die besteht aus: Füll- und Verstärkungsstoffen, Pigmenten, UV-Absorbern, Flammschutzmitteln, Entschäumern, Entlüftern, Benetzungs- und Dispergierhilfsmitteln, Glas- und Carbon-Fasern, -Geweben und -Gelegen, Carbo Nanotubes, Graphen, Katalysatoren, Verdickungsmitteln, Anti-Absetzmitteln, Anti-Schrumpfadditiven, Thixotropierungsmitteln, Trennmitteln, Verlaufsmitteln, Haftvermittlern, Mattierungsmitteln, Korrosionsinhibitoren, Slip-Additiven, Bioziden etc. Bevorzugt werden die Kunststoffadditive aus anorganischen und/oder organischen Füllstoffen wie Holzmehl, Zellstoff, Baumwollfasern, Kunstseidensträngen, mineralischen Fasern, Gesteinsmehl, Glimmer, Kurz- und Langfasern, Glasmatten, Kohlefasern, Weichmachern, anorganischen und/oder organischen Pigmenten, Flammschutzmitteln, Mitteln gegen Schädlinge, wie z.B. Termiten, Mitteln gegen Marderbiss etc. und sonstigen üblichen Kunststoffadditiven ausgewählt. Besonders bevorzugt sind faserartige Füllstoffe. Diese können in den erfindungsgemäßen Zusammensetzungen in einer Menge von bis zu etwa 40 Gew.-%, bevorzugt bis zu etwa 20 Gew.-%, bezogen auf die Gesamtmenge der Zusammensetzung, enthalten sein.

Die Erfindung betrifft weiterhin die Verwendung der erfindungsgemäßen festen Zusammensetzungen (A) zur Herstellung von duroplastischen Zusammensetzungen.

Die Erfindung betrifft weiterhin ein Verfahren zur Herstellung von duroplastischen Zusammen-setzungen, umfassend folgende Schritte:

a) Dispergieren der erfindungsgemäßen festen Zusammensetzungen (A) in einem oder mehreren zur Bildung des duroplastischen Kunststoffes befähigten Edukte oder einer Lösung davon, welche ggf. Kunststoffadditive enthalten, insbesondere solche, die vorteilhaft vor der Dispergierung zugesetzt werden,
b) gegebenenfalls Zusatz weiterer Komponenten und
c) Härtung der erhaltenen Dispersion.

**Dispergieren Schritt a)**

Die vorstehend erwähnten zur Bildung des duroplastischen Kunststoffes befähigten Edukte werden bevorzugt aus Monomeren, Oligomeren (Präpolymeren) oder Vernetzungsmitteln dafür ausgewählt.

Bevorzugte zur Bildung des duroplastischen Kunststoffes B) befähigte Edukte werden vorzugsweise aus der Gruppe ausgewählt, die besteht aus: Polyolen und Mischungen davon, aliphatischen Polyolen und Mischungen davon, aliphatischen Polyetherpolyolen und Mischungen davon, aliphatischen Polyesterpolyolen und Mischungen davon, aromatischen Polyesterpolyolen und Mischungen davon, Polyetherpolyesterpolyolen und Mischungen davon, ungestättigten Polyestern und Mischungen davon, aromatischen Alkoholen oder Mischungen davon, Styrol, Polyisocyanaten, Isocyanatharzen, Epoxidharzen, Phenolharzen, Furanharzen, Caprolactam, Dicyclopentadien, aliphatischen und cycloaliphatischen Aminen und Polyaminen, Polyamidoaminen, aromatischen Aminen und Polyaminen, RT- und HT-vernetzenden Silikonen, Cyano- und (Meth)acrylaten, Polyallyl-Verbindungen, Vinylestern, Polykondensations-Duroplasten im A-Zustand sowie Derivaten, Mischungen oder Lösungen der vorstehend genannten Ausgangsprodukte.

Besonders bevorzugt sind aliphatische Polyole und Mischungen davon, aromatische Alkohole, Styrol, Epoxidharze, Amine und ungesättigte Polyester.

In einer besonders bevorzugten Ausführungsform des Verfahrens werden die feste Zusammensetzung (A) und das zur Bildung des duroplastischen Kunststoffes befähigte Edukt, welches ggf. Kunststoffadditive enthält, die vorteilhaft vor der Dispergierung zugesetzt werden, gemeinsam der Behandlung mittels eines Homogenisators, einer Kugelmühle, einer Perlmühle, eines Walzenstuhles, einer Dreiwalze, einer Ein- oder Mehrwellen-Extruderschnecke, eines Kneters und/ oder eines Dissolvers unterworfen.

Die erfindungsgemäßen duroplastischen Zusammensetzungen können bereits mit apparativ einfachen Dispergiergeräten wie Walzen und Dissolvern reproduzierbar hergestellt werden. Durch die feine Verteilung der Mikrogele (A) im zur Bildung des duroplastischen Kunststoffes befähigten Eduktes ist anschließend auch eine besonders gute Verteilung der Mikrogele in dem duroplastischen Kunststoff B) möglich, was nach dem Stand der Technik bislang nur mit hohem apparativen Aufwand möglich war. Bereits bei Einsatz verbreiteter Dispergiergeräte werden die mechanischen Eigenschaften der duroplastischen Zusammensetzungen überraschend verbessert.

Die so erhaltenen Duroplastvorstufen können bequem bis zur Bildung der Duroplaste durch Aushärtung gegebenenfalls unter Zusatz von Härtern gelagert werden. Aufgrund ihrer feinen Verteilung kommt es nicht zu nennenswertem Absetzen.

Das Dispergieren erfolgt vorzugsweise bei einer volumenspezifischen Energiedichte von weniger als 10 kJ/m$^3$, insbesondere weniger als 8 kJ/m$^3$ an duroplastischem Kunststoff.

**Weitere Komponenten b)**

Bei den vorstehend erwähnten weiteren Komponenten b) zur Herstellung der duroplastischen Zusammensetzung handelt es sich insbesondere um die weitere (zweite) Komponente zur Bildung des duroplastischen Kunststoffes, insbesondere um den Härter wie beispielsweise ein Polyisocyanat, ein Polyamin, ein Formaldehydspender, Styrol etc. Weiterhin kann es sich auch um die erwähnten Kunststoffadditive handeln, wie beispielsweise faserartige Füllstoffe und andere.

**Härtung c)**

Die Härtung erfolgt im allgemeinen unter den für den duroplastischen Kunststoff üblichen Bedingungen. Besonders bevorzugt erfolgt Schritt c) unter gleichzeitiger Formgebung und/oder Bildung der Klebverbindungen zwischen den Fügeteilen.

Die Erfindung betrifft auch die duroplastischen Zusammensetzungen, die mit den vorstehend beschriebenen festen Zusammensetzungen (A), enthaltend die Mikrogele erhältlich sind.

Die Erfindung betrifft weiterhin auch die Verwendung der erfindungsgemäßen duroplastischen Zusammensetzungen als Formkörper, als Beschichtung oder Verbindungsmaterial/Klebstoff. Sie schließt auch die Herstellung mikrogelgefüllter sogenannter Prepregs ein. Die Erfindung betrifft u.a. weiterhin auch die Verwendung der erfindungsgemäßen Zusammensetzungen in elektronischen Bauteilen wie als Gehäuse für elektronische Geräte, in Konstruktionsbauteilen wie Baumaterialen, in Kompositbauteilen wie für die Auto-, Flugzeug- oder Schifffahrtsindustrie, in Ein- und Zwei-Komponenten-Klebstoffen wie für die Auto-, Flugzeug-, Schifffahrts-, Elektronik- oder Bauindustrie.

Die vorliegende Erfindung wird durch die folgenden Beispiele weiter erläutert. Die Erfindung ist jedoch nicht auf den Offenbarungsgehalt der Beispiele beschränkt.

**Beispiele:**

Beispiele zur Herstellung und Charakterisierung der Mikrogele

Nachfolgend wird die Herstellung der erfindungsgemäßen Mikrogele M1 bis M3 beschrieben, die in den weiteren Beispielen verwendet wurden. Außerdem wird die Herstellung von nicht-erfindungsgemäßen Vergleichsbeispielen B1 bis B4 nach dem Stand der Technik analog zu EP1674501 (siehe S. 12) beschrieben. Die Vergleichsbeispiele K1 bis K5 werden nach dem Stand der Technik analog zu US2006/0079609 hergestellt und durch Koagulation aufgearbeitet. K1 und M1 haben identische chemische Zusammensetzung, unterscheiden sich aber in der Aufarbeitung.Die Polymere M1 bis M3, B1 bis B4 und K1 bis K5 werden durch Emulsionspolymerisation hergestellt, wobei folgende Monomere eingesetzt werden: 1,3-Butadien (BDN), Styrol (ST), Acrylnitril (ACN), Hydroxyethylmethacrylat (HEMA), Trimethylolpropantrimethacrylat (TMPTMA), Methacrylamid (MAA), Acrylsäure (AS) und Divinylbenzol (DVB). Die für die Herstellung der Mikrogele verwendeten Monomere sowie wesentliche Rezepturbestandteile sind in folgender Tabelle zusammengefasst:

| | Wasser [g] | Emulgatoren | | Monomere | | | | | | | |
|---|---|---|---|---|---|---|---|---|---|---|---|
| | | Ölsäure [g] | AOS/ AlkylS [g] | BDN [g] | ST [g] | ACN [g] | TMPTMA [g] | HEMA [g] | AS [g] | MAA [g] | DVB [g] |
| M1 | 12900 | 129 | 226/-- | 3120 | -- | 795 | 172 | 215 | -- | -- | -- |
| M2 | 11200 | 168 | 280/-- | 3140 | -- | 2085 | 225 | -- | 155 | -- | -- |
| M3 | 12900 | 129 | 86/-- | 3175 | -- | 813 | 172 | -- | -- | 140 | -- |
| | | | | | | | | | | | |
| B1 | 11000 | -- | --/154 | 4110 | -- | -- | 70 | 220 | -- | -- | -- |
| B2 | 11000 | -- | --/154 | 3700 | 420 | -- | 70 | 220 | -- | -- | -- |
| B3 | 12900 | -- | --/ 215 | 3225 | -- | 1075 | -- | -- | -- | -- | -- |
| B4 | 12900 | 129 | 86/-- | 3100 | -- | 1030 | 172 | -- | -- | -- | -- |
| | | | | | | | | | | | |
| K1 | 12900 | 129 | 226/-- | 3120 | -- | 795 | 172 | 215 | -- | -- | -- |
| K2 | 12900 | 129 | 226/-- | 3363 | 860 | -- | -- | -- | -- | -- | 77 |
| K3 | 12900 | 129 | 226/-- | 3784 | 430 | -- | -- | -- | -- | -- | 91 |
| K4 | 12900 | 129 | 226/-- | 3741 | 430 | -- | 129 | -- | -- | -- | -- |
| K5 | 12900 | 129 | 226/-- | 4193 | -- | -- | -- | -- | -- | -- | 108 |

Die Angaben beziehen sich auf 100 % reine Einsatzstoffe. Bei AOS und AlkylS handelt es sich um sulfonathaltige Emulgatoren mit den CAS-Nummern 68439-57-6 (alpha-Olefin-Sulfonat) bzw. 68188-18-1 (Alkylsulfonat).
Die Herstellung der Polymere erfolgte in einem 20 L-Autoklaven mit Rührwerk. Für die Polymerisationsansätze wurden die Monomere zusammen mit 0,008 Gew.-% (bezogen auf die Summe der Monomere) 4-Methoxyphenol eingesetzt. Emulgator sowie die in der Tabelle angegebenen Wassermengen (abzüglich der für die Herstellung der wässrigen Prämix- und Initiatorlösungen benötigten Wassermengen) wurden jeweils im Autoklaven als erstes vorgelegt.
Nach Temperierung der Reaktionsmischung auf 15 °C wurde frisch hergestellte, wässrige Prämixlösung (4 %ig) zur Aktivierung des Initiators in den Autoklaven gegeben. Diese Prämixlösungen bestanden aus 0,284 g Ethylendiamintetraessigsäure, 0,238 g Eisen(II)-sulfat * 7 $H_2O$ (ohne Kristall-wasser berechnet) sowie 0,576 g Rongalit® C (Na-Formaldehydsulfoxylat-2-hydrat, ohne Kristallwasser berechnet). Es wurde zunächst die Hälfte der Lösung zugegeben. Zur Initiierung wurden in den Reaktor außerdem 0,058 Gew.-% (wiederrum bezogen auf die Summe aller Monomere) p-Menthanhydroperoxid (Trigonox® NT 50 der Akzo-Degussa) dosiert, die in 200 mL der im Reaktor hergestellten Emulgatorlösung emulgiert wurden. Für acrylnitrilhaltige Typen wurden 0,02 Gew.-% dosiert. Bei Erreichen von 30 % Umsatz wurden die restlichen 50 % der Prämixlösung zudosiert.

Die Temperaturführung während der Polymerisation erfolgte durch Einstellung von Kühlmittelmenge und Kühlmitteltemperatur auf 15 ± 5 °C.

Bei Erreichen eines Polymerisationsumsatzes von mehr als 85 % (üblicherweise: 90 % bis 100 %) wurde die Polymerisation durch Zugabe einer wässrigen Lösung von 2,35 g Diethylhydroxylamin abgestoppt. Zur Entfernung flüchtiger Bestandteile aus dem Latex wurde der Latex mit Wasserdampf gestrippt.

Die analytischen Daten, bestimmt nach den oben beschriebenen Methoden, gibt folgende Tabelle wieder. Für die Analytikfällung wurden die Polymere bei 60 °C mit $CaCl_2$ ausgefällt und gewaschen. Die Vergleichsbeispiele K1 bis K5 wurden bei 75 °C mit NaCl und Phosphorsäure in der nötigen größeren Menge koaguliert, um sie nach Waschen und Trocknen (bei 55 - 60°C im Trockenschrank unter Vakuum bis zur Gewichtskonstanz) auf Rieselfähigkeit zu testen.

| Mikrogel | Durchmesser Primärpartikel [nm][1] | Gelgehalt [%][2] | Quellungsindex[3] | Tg [°C] [4] | Tg-Breite [°C][5] | OH-Zahl [mg$_{KOH}$/g$_{Pol.}$] [6] | Säure-Zahl [mg$_{KOH}$/g$_{Pol.}$] [7] |
|---|---|---|---|---|---|---|---|
| M1 | 82 | 81 | 6,6 | -41 | 22 | 23,7 | 8,0 |
| M2 | 75 | 99 | 3,3 | -19 | 19 | 1,0 | 12,4 |
| M3 | 57 | 96 | 9,2 | -41 | 23 | 6,5 | 11,3 |
| B1 | 40 | 95 | 14,6 | -80 | 6 | 13,2 | 3,1 |
| B2 | 47 | 95 | 17,5 | -69 | 6 | 17,0 | 3,8 |
| B3 | 72 | 30 | 27,2 | -34 | 10 | 4,8 | 4,2 |
| B4 | 52 | 73 | 6,1 | -38 | 23 | 5,6 | 7,4 |
|  |  |  |  |  |  |  |  |
| K1 | 82 | 81 | 6,6 | -41 | 22 | 23,7 | 8,0 |
| K2 | 44 | 93 | 9,2 | -57 | 8 | ** | ** |
| K3 | 38 | 92 | 10,5 | -68 | 7 | ** | ** |
| K4 | 37 | 47 | 37 | -70 | 8 | ** | ** |
| K5 | 45 | 94 | 10,9 | -74 | 12 | ** | ** |
| [1-7] bestimmt nach den oben beschriebenen Methoden, ** nicht gemessen | | | | | | | |

Beispiele zur Sprühtrocknung der Mikrogele und deren Charakterisierung:

Die Sprühtrocknung der nach M1 - M3 bzw. B1 - B4 erhaltenen Emulsionspolymerisate (Latex) wurde mit einem Büchi-Laborsprühtrockner B-290 durchgeführt, dabei wurden typischerweise folgende Einstellungen gewählt: Flow 40 mm $\hat{=}$ 473 L/h, Lufteintrittstemperatur 135 °C, Nozzle Cleaner-Einstellung 2, Pumpe bei 45 %, Luftaustrittstemperatur ca. 75 °C. Der verwendete Latex wurde vor der Sprühtrocknung durch ein 50 μm Monodurtuch gegeben. Vor der eigentlichen Sprühtrocknung wurde der Sprühtrockner durch Versprühen von Wasser aufgeheizt. Es wurde jener Teil des getrockneten Polymers weiterverwendet, der sich bei der Sprühtrocknung im Zyklon und/oder im Auffangbehälter abscheidet. Material, das sich an der Wand des Sprühzylinders abscheidet oder durch den Zyklon hindurch zum Abluftfilter gelangt, galt als verloren. Somit berechnet sich die Ausbeute der Sprühtrocknung als Quotient von tatsächlich erhaltener Menge und theoretisch möglicher Menge. Diese ergibt sich als Produkt der verwendeten Menge Latex und dessen Feststoffkonzentration. Der Sprühvorgang lief kontinuierlich über mehrere Stunden, um einen stationären Betrieb zu gewährleisten.

Das im Zyklon und/oder Auffangbehälter abgeschiedene Material wurde danach in einen PE-Behälter mit Drehverschluss gefüllt und mit einer vorgegebenen Menge Pudermittel versetzt. Hierbei handelte es sich um 2 Gew.-% der gefällten Kieselsäure Sipernat® D17 (Evonik Degussa GmbH). Die Durchmischung erfolgte in einem Taumelmischer Turbula® T2F der Firma Willy A. Bachofen AG Maschinenfabrik mit einer Getriebeeinstellung von 49 UpM bei einer Mischzeit von 30 Minuten.

**Rieselfähigkeitstest**

An dem bepuderten Material wurden anschließend Rieselfähigkeitstests wie in EN ISO 6186:1998, Verfahren A durchgeführt. Die Rieselfähigkeit wird anhand der Ausflusszeit und des Fließverhaltens von 150 g Pulver durch einen Trichter mit vorgegebener Düsengröße (10, 15 oder 25 mm Auslaufdurchmesser, hier wurde 15 mm gewählt) beurteilt.

**Bestimmung der Schüttdichte**

Es wurde außerdem die Schüttdichte des Materials wie in EN ISO 60:1999 bestimmt. Dazu wurde die Masse von 100 mL Pulver gemessen und die Schüttdichte in g/mL angegeben. Für beide genannten Prüfungen wurde ein Fluometer der Firma KARG Industrietechnik verwendet.

**Verblockungsneigung**

Die Verblockungsneigung der Pulver wurde ebenfalls ermittelt. Die Prüfung erfolgte nach einer internen Vorschrift. Die Füllform wird auf eine ebene Grundplatte aufgesetzt und die Probe eingefüllt. Bei der Füllform handelt es sich um ein Rohr aus VA-Stahl mit glatten Oberflächen, das 45 mm Innendurchmesser und eine Höhe von 50 mm besitzt. Die Probenmenge ist so zu wählen, dass ca. 1 cm Presskuchen entsteht. Anschließend wird der Stempel aus Aluminium auf das Probenmaterial aufgesetzt, der ebenfalls einen Durchmesser von 45 mm besitzt sowie ein Gewicht von 178 g. Der Stempel wird mit einem Gewicht von 4,7 kg beschwert und die Prüfzeit von 24 h gestartet. Nach Ablauf der Zeit wird das Gewicht entfernt, der Stempel heraus- und die Füllform abgezogen, ohne dabei den Presskuchen zu beschädigen. Das Prüfergebnis gibt die optische Bewertung des Presskuchens nach folgenden Kriterien wieder:

1 = Probe nicht verblockt, fällt sofort nach Entfernung der Form auseinander
2 = Probe nur gering verblockt, fällt bei geringem Druck auseinander
3 = Probe leicht verblockt, klebt zusammen, mit leichtem Druck auseinanderzubrechen
4 = Probe stark verblockt, Trennung nur unter Kraftaufwand, zerfällt wieder in Ursprungsprobe
5 = Probe stark verblockt, Trennung nur unter Kraftaufwand, Bruchstücke weiterhin verklebt
6 = Probe im Rahmen des Versuchs nicht mehr zu trennen

**Optische Qualität**

Abschließend wurde auch die Qualität des nach Sprühtrocknung erhaltenen Materials an sich einer optischen Beurteilung unterzogen und unter Heranziehung der folgenden Kriterien bewertet:

1 = Material mit sehr gleichmäßig feiner Korngrößenverteilung, sehr wenig klebrig, nicht verfärbt, sehr wenig staubend, Sprühtrocknung störungsfrei
2 = Material mit nur geringem Anteil größerer Agglomerate, wenig klebrig, gering verfärbt, wenig staubend, Sprühtrocknung meist störungsfrei
3 = Material mit deutlichem Anteil größerer Agglomerate oder einigen besonders großen Agglomeraten, leicht klebrig, leicht staubend, leicht verfärbt, Sprühtrocknung oft gestört
4 = Material mit Agglomeraten vieler verschiedener Korngrößen, klebrig, staubend, verfärbt, Sprühtrocknung sehr oft von Störung unterbrochen
5 = Material mit sehr inhomogener Korngrößenverteilung, sehr klebrig, sehr staubend, sehr verfärbt, Sprühtrocknung kaum durchführbar
6 = kein Pulvermaterial erhalten, Sprühtrocknung nicht durchführbar

Nachfolgende Tabelle fasst die Ergebnisse zusammen.

| Mikrogel | Rieselfähigkeit [s] / Düsen-Ø 15 mm | Schüttdichte [g/L] | Ausbeute der Sprühtrocknung [%] | Verblockung | Qualität |
|---|---|---|---|---|---|
| M1 | 21 | 185,0 | 39,4 | 4 | 2 |
| M2 | 22 | 261,5 | 46,5 | 1 | 1 |
| M3 | 28 | 166,5 | 40,7 | 4 | 2 |

(fortgesetzt)

| Vergleich | | | | | |
|---|---|---|---|---|---|
| B1 | nicht rieselfähig | 145,1 | 29,8 | 5 | 5 |
| B2 | 35 | 169,4 | 27,3 | 5 | 5 |
| B3 | – –[1] | – –[1] | – –[1] | – –[1] | 6 |
| B4 | 29 | 156,1 | 49,8 | 5 | 5 |
| [1] Sprühtrocknung liefert nur verklebtes Produkt, daher keine Analytik möglich. | | | | | |

Die Vergleichsbeispiele K1 bis K5 zeigen selbst bei größtem Düsendurchmesser von 25 mm keine Rieselfähigkeit und sind nicht zur Lösung der erfindungsgemäßen Aufgabe geeignet.

Wie aus dem Vergleich der erfindungsgemäßen Beispiele mit den Beispielen nach dem Stand der Technik für Mikrogele außerdem ersichtlich wird, erhält man durch Sprühtrocknung der erfindungsgemäßen Mikrogele Material, das sich aufgrund der erfindungsgemäßen Merkmalskombination sehr gut für die Dosierung in Pulverform eignet. Der Stand der Technik eignet sich nicht zur Sprühtrocknung oder ergibt nur sprühgetrocknetes Material, das nicht oder nur sehr schlecht überhaupt rieselfähig ist, das niedrigere Schüttdichten aufweist, das in deutlich schlechteren Ausbeuten erhalten werden kann, das sehr stark zur Verblockung neigt, das von deutlich inhomogenerer und schlechter Qualität ist und das insgesamt zur Aufarbeitung durch Sprühtrocknung ungeeignet ist.

Beispiel für hohe Dispergierbarkeit der erfindungsgemäßen Mikrogele mittels einfachen Dissolvers

Das erfindungsgemäße, sprühgetrocknete und bepuderte obige Mikrogel M3 wurde mittels Vakuumdissolver in dem Epoxidharzedukt Araldite® LY 564 (Huntsman) dispergiert. Die Partikelkonzentration wurde so eingestellt, dass sich nach der Beimischung von Härter, abhängig von der konkret gewählten Rezeptur, ein Anteil von 5 Gew.-% an der Kunststoffmischung für das Mikrogel ergibt. Im Edukt des auszuhärtenden Epoxidharzes muss die Mikrogelkonzentration entsprechend höher liegen. Im vorliegenden Beispiel betrug der Anteil des bepuderten Mikrogels M3 an der Epoxidharzeduktmischung 7 Gew.-%. Es wurde bei 5000 UpM dispergiert, wobei die Temperatur der Mischung zwischen 20 und 45 °C gehalten wurde.

Die Partikelgrößenverteilung im Epoxidharzedukt wurde zu vier verschiedenen Dispergierzeiten mittels dynamischer Lichtstreuung bestimmt. Dabei konnte gezeigt werden, dass sich die Partikelgrößenverteilung durch Zerteilung der Mikrogelagglomerate bereits nach 15 min im Wesentlichen nicht mehr ändert. Bereits nach kurzer Mischzeit und mit sehr einfachem Gerät wird eine Dispersion der Mikrogelpartikel bis auf Primärpartikelgröße erreicht, ersichtlich am Radius der detektierten Partikel. Dieser ist in sehr guter Übereinstimmung mit dem Durchmesser der Mikrogelpartikel, wie er vor Sprühtrocknung und Dispergierung im Polymer-Latex bestimmt wurde.

Beispiel für die Modifizierung von Epoxidharzen und Bewertung anhand mechanischer Daten

Zur Herstellung der Duromermischungen wurden die jeweiligen Partikel mittels Vakuumdissolver in dem Epoxidharzedukt Araldite® LY 564 (Huntsman) bei 5000 UpM für 60 min dispergiert, wobei die Temperatur der Mischung zwischen 20 und 45 °C gehalten wurde. Die Menge der Partikel wurde jeweils so gewählt, dass ihr Anteil an der späteren Gesamtmischung 5 Gew.-% betrug. Zu der Mischung wurden weiterhin zu Beginn die Härterkomponente Aradur® 2954 (Huntsman) in der Konzentration 35 phr (parts per hundred resin, also z.B. 35 g Härter zu 100 g Harzedukt) sowie 0,2 phr des Entlüfters Byk®-A 515 gegeben und mitdispergiert.

Zur Bestimmung der mechanischen Eigenschaften wurden Probenkörper in den Abmessungen hergestellt, wie sie in den jeweiligen Normen gefordert werden. Die Aushärtung erfolgte anhand eines für dieses Harz-Härter-System etablierten Temperaturprogramms von 2 h bei 60 °C sowie weiteren 8 h bei 120 °C.

Wie in DIN EN ISO 178 beschrieben wurden Drei-Punkt-Biegungsmessungen (3PB) an einer Zwick Universaltestmaschine durchgeführt, womit der Biegemodul $E_f$, die Biegefestigkeit $\sigma_{fm}$ sowie die maximale Deformation $\varepsilon_{fm}$ bestimmt wurden. Die Zähigkeit der Materialien wurde an Compact Tension (CT) Prüfkörpern gemäß ISO 13586 an einer Zwick Universaltestmaschine bestimmt, wobei die ermittelten $K_{Ic}$-Werte als Maß für die Bruchzähigkeit sowie die $G_{Ic}$-Werte als Maß für die aufnehmbare Bruchenergie dienen. Schlagzähigkeiten aK nach Charpy wurden an einem Prüfgerät von Ceast wie in DIN ISO 179/1fU beschrieben durchgeführt.

Die erhaltenen Ergebnisse sind in nachfolgender Tabelle aufgeführt. Bei P52 handelt es sich um den kommerziell erhältlichen, pulverförmigen Schlagzähmodifikator Genioperl® P52 (Wacker Chemie AG). Für die Proben M1 wurde das oben sprühgetrocknete und bepuderte Mikrogel M1 verwendet. Als Referenz dienen unmodifizierte Probenkörper, bei deren Herstellung kein Modifikator zur Harzmischung zugesetzt wurde.

| | Ef [GPa] | $\sigma_{fm}$ [MPa] | $\varepsilon_{fm}$ [%] | $K_{lc}$ [MPa·m$^{0,5}$] | $G_{lc}$ [kJ/m$^2$] | aK [kJ/mm$^2$] |
|---|---|---|---|---|---|---|
| M1 | 2,41 | 100 | 7,5 | 1,21 | 0,65 | 35 |
| | | | | | | |
| P52 | 2,40 | 104 | 7,9 | 1,07 | 0,48 | 41 |
| Referenz | 2,47 | 110 | 7,7 | 0,66 | 0,18 | 29 |

Die Ergebnisse zeigen, dass die Modifikation der Duroplastmischung mit erfindungsgemäßen Mikrogelen mit einfachen Mitteln möglich ist und dass durch die Modifikation mit erfindungsgemäßen Mikrogelen die Eigenschaften der Mischung vorteilig beeinflusst werden. Bruch- und Schlagzähigkeit werden in hohem Maße, besonders auch im Vergleich zu alternativen Lösungen, gesteigert, während die restlichen mechanischen Eigenschaften wie gewünscht nur marginal beeinflusst werden.

**Patentansprüche**

1.  Partikuläre, bei 20 °C feste Zusammensetzungen, enthaltend wenigstens ein Copolymer auf Basis wenigstens folgender Comonomerer a) bis d)

    a) konjugiertes Dien,
    b) $\alpha,\beta$-ungesättigtes Nitril,
    c) wenigstens ein polyfunktionelles radikalisch polymerisierbares Comonomer und
    d) wenigstens ein Carboxy-, Hydroxy-, Epoxy- und/oder Aminogruppenfunktionelles radikalisch polymerisierbares Comonomer,

    welche einen durchschnittlichen Teilchendurchmesser der Primärteilchen von 5 bis 500 nm besitzen, **dadurch gekennzeichnet, dass** diese Zusammensetzungen eine Rieselfähigkeit nach EN DIN 6186:1998 (Trichterdurchmesser 15 mm) von maximal 33 s aufweisen.

2.  Partikuläre Zusammensetzungen gemäß Anspruch 1, **dadurch gekennzeichnet, dass** der Gehalt an Copolymer-Einheiten auf Basis des konjugiertes Diens, insbesondere Butadien der Komponente a) 10 bis 98,5 Gew.-%, vorzugsweise 25 bis 85 Gew.-%, bezogen auf die Gesamtmenge aller Comonomer-Einheiten beträgt.

3.  Partikuläre Zusammensetzungen gemäß wenigstens einem der Ansprüche 1 bis 2, **dadurch gekennzeichnet, dass** der Gehalt an Copolymer-Einheiten auf Basis des $\alpha,\beta$-ungesättigten Nitrils, insbesondere Acrylnitrils der Komponente b) 0,5 bis 60 Gew.-%, vorzugsweise 5 bis 55 Gew.-%, besonders bevorzugt 15 bis 50 Gew.-%, bezogen auf die Gesamtmenge aller Comonomer-Einheiten beträgt.

4.  Partikuläre Zusammensetzungen gemäß wenigstens einem der Ansprüche 1 bis 3, **dadurch gekennzeichnet, dass** der Gehalt an Copolymer-Einheiten auf Basis von der Komponente c) 0,5 bis 10 Gew.-%, vorzugsweise 0,5 bis 8 Gew.-%, besonders bevorzugt 0,5 bis 5 Gew.-%, bezogen auf die Gesamtmenge aller Comonomer-Einheiten beträgt.

5.  Partikuläre Zusammensetzungen gemäß wenigstens einem der Ansprüche 1 bis 4, **dadurch gekennzeichnet, dass** der Gehalt an Copolymer-Einheiten auf Basis von der Komponente d) 0,5 bis 20 Gew.-%, vorzugsweise 1 bis 15 Gew.-%, besonders bevorzugt 1 bis 10 Gew.-%, bezogen auf die Gesamtmenge aller Comonomer-Einheiten beträgt.

6.  Partikuläre Zusammensetzungen gemäß wenigstens einem der Ansprüche 1 bis 5, **dadurch gekennzeichnet, dass** das polyfunktionelle, radikalisch polymerisierbare Comonomer der Komponente c) aus Monomeren ausgewählt wird, die zwei oder mehr funktionelle, radikalisch polymerisierbare Gruppen aufweisen, insbesondere zwei- oder mehrfach ungesättigte Monomere, insbesondere Verbindungen mit 2, 3 oder 4 polymerisierbaren C=C Doppelbindungen, wie insbesondere Diisopropenylbenzol, Divinylbenzol, Divinylether, Divinylsulfon, Diallylphthalat, Triallylcyanurat, Triallylisocyanurat, 1, 2-Poly-butadien, N,N'-m-Phenylenmaleimid, 2, 4-Toluylenbis(maleimid), Triallyltrimellitat, Acrylamide wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat sowie ganz besonders bevorzugt polyfunktionellen Acrylaten, Methacrylaten und Itakonaten von mehrwertigen $C_2$- bis $C_{10}$-Alkohlen, insbesondere Ethylenglykol, Propandiol-1, 2, Butandiol-1,4, Hexandiol, Polyethylenglykol mit 2 bis 20, insbesondere 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Mischungen hiervon, insbesondere werden die polyfunktionellen radikalisch polymerisierbaren Co-monomere der Komponente c) ausgewählt aus: Divinylbenzol, Trimethylolpropantrimethacrylat (TMPTMA), Trimethylolpropan-triacrylat, Ethylenglykoldimethacrylat, Ethylenglykoldiacrylat, Butandiol-1,4-di(meth)acrylat und Mischungen hiervon.

7.  Partikuläre Zusammensetzungen gemäß wenigstens einem der Ansprüche 1 bis 6, **dadurch gekennzeichnet, dass** das funktionalisierte Comonomere der Komponente d) ausgewählt wird aus der Gruppe bestehend aus Acrylsäure, Methacrylsäure, Maleinsäure, Fumarsäure, Itakonsäure, aminfunktionalisierten (Meth)acrylaten, wie primäre Amino- alkyl(meth)acrylsäureestern, wie Aminoethyl(meth)-acrylat, Aminopropyl(meth)acrylat und Amino-butyl(meth)acrylat, sekundäre Aminoalkyl(meth)-acrylsäureestern, insbesondere tert.-Butylamino $(C_2-C_4)$alkyl(meth)acrylat, Acrolein, N-Vinyl-2- pyrrolidon, N-Vinylimidazol, 2-Vinyl-pyridin, 4-Vinyl-pyridin, N-Allyl-Harnstoff und N-Allyl-Thioharnstoff, (Meth) acrylamide, wie (Meth)acrylamid, einfach oder zweifach N-substituierte (Meth)acrylamide, hydroxyfunktionalierte (Meth)acrylaten, wie Hydroxyethyl-methacrylat (HEMA), Hydroxy-propyl(meth)acrylat, Hydroxybutyl(meth)acrylat, Polyethylenglykol(meth)acrylate wie Hydroxy- oder Methoxypolyethylenglykolmethacrylat, Polypropylenglykol(meth)acrylate, Stearylmethacrylat, epoxy-funktionelle Monomere wie Glycidyl(meth)acrylat, Mono- oder Diester von $\alpha,\beta$-ungesättigten Dicarbonsäuren wie Alkyl-, bevorzugt $C_1-C_{10}$-Alkyl, insbesondere Ethyl-, n-Propyl-, iso-Propyl, n-Butyl-, tert.-Butyl-, n-Pentyl- oder n-Hexyl-, Alkoxyalkyl-, bevorzugt $C_2-C_{12}$ Alkoxyalkyl-, besonders bevorzugt $C_3-C_8$-Alkoxyalkyl-, Hydroxyalkyl-, bevorzugt $C_1-C_{12}$-Hydroxyalkyl-, besonders bevorzugt $C_2-C_8$-Hydroxyalkyl, Cycloalkyl-, bevorzugt $C_5-C_{12}$-Cycloalkyl-, besonders bevorzugt $C_6-C_{12}$-Cycloalkyl-, Alkylcycloalkyl-, bevorzugt $C_6-C_{12}$-Alkylcycloalkyl-, besonders bevorzugt $C_7-C_{10}$-Alkylcycloalkyl-, Aryl-, bevorzugt $C_6-C_{14}$-Aryl-mono- oder -diester, wobei es sich im Fall der Diester jeweils auch um gemischte Ester handeln kann und Mischungen hiervon.

8.  Partikuläre Zusammensetzungen gemäß wenigstens einem der Ansprüche 1 bis 7, **dadurch gekennzeichnet, dass** sie 0 - 20, bevorzugter 0 - 15, noch bevorzugter 1 - 10 % eines Trennmittels, bezogen auf die Zusammensetzung enthalten.

9.  Verfahren zur Herstellung der partikulären Zusammensetzungen gemäß wenigstens einem der Ansprüche 1 bis 8, **dadurch gekennzeichnet, dass** man wenigstens die Komponenten a) bis d) einer Emulsionspolymerisation unterwirft und anschließend gegebenenfalls nach Zugabe eines Trennmittels sprühtrocknet.

10. Verwendung der partikulären Zusammensetzungen gemäß wenigstens einem der Ansprüche 1 bis 8 als Additiv in Duroplast-Zusammensetzungen, vorzugsweise zur Erhöhung der Schlagzähigkeit.

11. Duroplastische Zusammensetzungen enthaltend wenigstens

    A) eine partikuläre Zusammensetzung gemäß wenigstens einem der Ansprüche 1 bis 8 und
    B) einen duroplastischen Kunststoff.

12. Verfahren zur Herstellung von duroplastischen Zusammensetzungen nach Anspruch 11, umfassend folgende Schritte:

    a) Dispergieren der partikulären Zusammensetzung gemäß wenigstens einem der Ansprüche 1 bis 8 in einem oder mehreren zur Bildung des duroplastischen Kunststoffes befähigten Edukte oder einer Lösung davon, welche ggf. Kunststoffadditive enthalten, insbesondere solche, die vorteilhaft vor der Dispergierung zugesetzt werden,
    b) gegebenenfalls Zusatz weiterer Komponenten und
    c) Härtung der erhaltenen Dispersion.

13. Verwendung der duroplastischen Zusammensetzungen gemäß Anspruch 11 als Formkörper, als Beschichtung oder Verbindungsmaterial oder Klebstoff.

**Claims**

1. Particulate compositions solid at 20°C and comprising at least one copolymer based on at least the following comonomers a) to d)

   a) conjugated diene,
   b) $\alpha,\beta$-unsaturated nitrile,
   c) at least one polyfunctional radically polymerizable comonomer and
   d) at least one carboxyl-, hydroxyl-, epoxy- and/or amino-group-functional radically polymerizable comonomer,

   which possess an average particle diameter of the primary particles of 5 to 500 nm, **characterized in that** these compositions possess a pourability to EN DIN 6186:1998 (funnel diameter 15 mm) of not more than 33 s.

2. Particulate compositions according to Claim 1, **characterized in that** the amount of copolymer units based on the conjugated diene, more particularly butadiene, of component a) is 10 to 98.5 wt%, preferably 25 to 85 wt%, based on the total amount of all comonomer units.

3. Particulate compositions according to at least one of Claims 1 to 2, **characterized in that** the amount of copolymer units based on the $\alpha,\beta$-unsaturated nitriles, more particularly acrylonitrile, of component b) is 0.5 to 60 wt%, preferably 5 to 55 wt%, more preferably 15 to 50 wt%, based on the total amount of all comonomer units.

4. Particulate compositions according to at least one of Claims 1 to 3, **characterized in that** the amount of copolymer units based on component c) is 0.5 to 10 wt%, preferably 0.5 to 8 wt%, more preferably 0.5 to 5 wt%, based on the total amount of all comonomer units.

5. Particulate compositions according to at least one of Claims 1 to 4, **characterized in that** the amount of copolymer units based on component d) is 0.5 to 20 wt%, preferably 1 to 15 wt%, more preferably 1 to 10 wt%, based on the total amount of all comonomer units.

6. Particulate compositions according to at least one of Claims 1 to 5, **characterized in that** the polyfunctional, radically polymerizable comomoner of component c) is selected from monomers which have two or more functional, radically polymerizable groups, more particularly diunsaturated or polyunsaturated monomers, more particularly compounds having 2, 3 or 4 polymerizable C=C double bonds, such as, in particular diisopropenylbenzene, divinylbenzene, divinyl ether, divinyl sulfone, diallyl phthalate, triallyl cyanurate, triallyl isocyanurate, 1,2-polybutadiene, N,N'-m-phenylenemaleimide, 2,4-tolylenebis(maleimide), triallyl trimellitate, acrylamides such as methylenebisacrylamide, hexamethylene-1,6-bisacrylamide, diethylentriamine-trismethacrylamide, bis(methacrylamidopropoxy)ethane or 2-acrylamidoethyl acrylate, and also especially preferably polyfunctional acrylates, methacrylates and itaconates of polyhydric $C_2$ to $C_{10}$ alcohols, especially ethylene glycol, propane-1,2-diol, butane-1,4-diol, hexanediol, polyethylene glycol having 2 to 20, especially 2 to 8, oxyethylene units, neopentyl glycol, bisphenol A, glycerol, trimethylolpropane, pentaerythritol and sorbitol with unsaturated polyesters formed from aliphatic diols and polyols and also mixtures thereof, the polyfunctional radically polymerizable comonomers of component c) being selected more particularly from the following: divinylbenzene, trimethylolpropane trimethacrylate (TMPTMA), trimethylolpropan triacrylate, ethylene glycol dimethacrylate, ethylene glycol diacrylate, butane-1,4-diol di(meth)acrylate and mixtures thereof.

7. Particulate compositions according to at least one of Claims 1 to 6, **characterized in that** the functionalized comonomer of component d) is selected from the group consisting of acrylic acid, methacrylic acid, maleic acid, fumaric acid, itaconic acid, amine-functionalized (meth)acrylates, such as primary aminoalkyl (meth)acrylic esters, such as aminoethyl (meth)acrylate, aminopropyl (meth)acrylate and aminobutyl (meth)acrylate, secondary aminoalkyl (meth)acrylic esters, especially tert-butylamino($C_2$-$C_4$)alkyl (meth)acrylate, acrolein, N-vinyl-2-pyrrolidone, N-vinylimidazole, 2-vinylpyridine, 4-vinylpyridine, N-allylurea and N-allylthiourea, (meth)acrylamides, such as (meth)acrylamide, singly or doubly N-substituted (meth)acrylamides, hydroxy-functionalized (meth)acrylates, such as hydroxyethyl methacrylate (HEMA), hydroxypropyl (meth)acrylate, hydroxybutyl (meth)acrylate, polyethylene glycol (meth)acrylates such as hydroxy- or methoxypolyethylene glycol methacrylate, polypropylene glycol (meth)acrylates, stearyl methacrylate, epoxy-functional monomers such as glycidyl (meth)acrylate, monoesters or diesters of $\alpha,\beta$-unsaturated dicarboxylic acids such as alkyl, preferably $C_1$-$C_{10}$ alkyl, especially ethyl, n-propyl, isopropyl, n-butyl, tert-butyl, n-pentyl or n-hexyl-, alkoxyalkyl, preferably $C_2$-$C_{12}$ alkoxyalkyl, more preferably $C_3$-$C_8$ alkoxyalkyl, hydroxyalkyl, preferably $C_1$-$C_{12}$ hydroxyalkyl, more preferably $C_2$-$C_8$ hydroxyalkyl, cycloalkyl, preferably $C_5$-$C_{12}$ cycloalkyl, more preferably $C_6$-$C_{12}$ cycloalkyl, alkylcycloalkyl, preferably $C_6$-$C_{12}$ alkylcycloalkyl, more preferably $C_7$-$C_{10}$

alkylcycloalkyl, aryl, preferably $C_6$-$C_{14}$ aryl, monoesters or diesters, it being possible for the esters also to be mixed esters in the case of the diesters, and mixtures thereof.

8. Particulate compositions according to at least one of Claims 1 to 7, **characterized in that** they contain 0 - 20, more preferably 0 - 15, even more preferably 1 - 10% of a release agent, based on the composition.

9. Method for producing the particulate compositions according to at least one of Claims 1 to 8, **characterized in that** at least components a) to d) are subjected to an emulsion polymerization and subsequently spray-dried, optionally after addition of a release agent.

10. Use of the particulate compositions according to at least one of Claims 1 to 8 as an additive in thermoset compositions, preferably for increasing the impact strength.

11. Thermoset compositions comprising at least

    A) a particulate composition according to at least one of Claims 1 to 8 and
    B) a thermosetting polymer.

12. Method for producing thermoset compositions according to Claim 11, comprising the following steps:

    a) dispersing the particulate composition according to at least one of Claims 1 to 8 in one or more reactants capable of forming the thermosetting polymer, or a solution thereof, which optionally comprise plastics additives, more particularly those which are added advantageously prior to dispersing,
    b) optionally adding further components and
    c) curing the resulting dispersion.

13. Use of the thermoset compositions according to Claim 11 as shaped articles, as coating or joining material or adhesive.

**Revendications**

1. Compositions particulaires solides à 20 °C, contenant au moins un copolymère à base d'au moins les comonomères a) à d) suivants :

    a) un diène conjugué,
    b) un nitrile $\alpha,\beta$-insaturé,
    c) au moins un comonomère polyfonctionnel polymérisable par voie radicalaire, et
    d) au moins un comonomère à fonction carboxy, hydroxy, époxy et/ou amino polymérisable par voie radicalaire,

qui présentent un diamètre de particule moyen des particules primaires de 5 à 500 nm, **caractérisées en ce que** ces compositions présentent un ruissellement selon EN DIN 6186:1998 (diamètre d'entonnoir 15 mm) d'au plus 33 s.

2. Compositions particulaires selon la revendication 1, **caractérisées en ce que** la teneur en unités du copolymère à base du diène conjugué, notamment le butadiène du composant a), est de 10 à 98,5 % en poids, de préférence de 25 à 85 % en poids, par rapport à la quantité totale de toutes les unités comonomères.

3. Compositions particulaires selon au moins l'une quelconque des revendications 1 à 2, **caractérisées en ce que** la teneur en unités du copolymère à base du nitrile $\alpha,\beta$-insaturé, notamment l'acrylonitrile du composant b), est de 0,5 à 60 % en poids, de préférence de 5 à 55 % en poids, de manière particulièrement préférée de 15 à 50 % en poids, par rapport à la quantité totale de toutes les unités comonomères.

4. Compositions particulaires selon au moins l'une quelconque des revendications 1 à 3, **caractérisées en ce que** la teneur en unités du copolymère à base du composant c) est de 0,5 à 10 % en poids, de préférence de 0,5 à 8 % en poids, de manière particulièrement préférée de 0,5 à 5 % en poids, par rapport à la quantité totale de toutes les unités comonomères.

5. Compositions particulaires selon au moins l'une quelconque des revendications 1 à 4, **caractérisées en ce que** la teneur en unités du copolymère à base du composant d) est de 0,5 à 20 % en poids, de préférence de 1 à 15 % en poids, de manière particulièrement préférée de 1 à 10 % en poids, par rapport à la quantité totale de toutes les unités comonomères.

**6.** Compositions particulaires selon au moins l'une quelconque des revendications 1 à 5, **caractérisées en ce que** le comonomère polyfonctionnel polymérisable par voie radicalaire du composant c) est choisi parmi les monomères qui comprennent deux groupes fonctionnels polymérisables par voie radicalaire ou plus, notamment les monomères bi- ou polyinsaturés, notamment les composés contenant 2, 3 ou 4 doubles liaisons C=C polymérisables, tels que notamment le diisopropénylbenzène, le divinylbenzène, l'éther divinylique, la divinylsulfone, le phtalate de diallyle, le cyanurate de triallyle, l'isocyanurate de triallyle, le 1,2-polybutadiène, le N,N'-m-phénylène-maléimide, le 2,4-toluylène-bis(maléimide), le triméllitate de triallyle, les acrylamides, tels que p. ex. le méthylène-bisacrylamide, l'hexaméthylène-1,6-bisacrylamide, le diéthylène-triamine-tris-méthacrylamide, le bis(méthacrylamido-propoxy)éthane ou l'acrylate de 2-acrylamido-éthyle, ainsi que de manière tout particulièrement préférée les acrylates, méthacrylates et itaconates polyfonctionnels d'alcools en C$_2$ à C$_{10}$ polyvalents, notamment l'éthylène glycol, le propanediol-1,2, le butanediol-1,4, l'hexanediol, le polyéthylène glycol contenant 2 à 20, notamment 2 à 8 unités oxyéthylène, le néopentylglycol, le bisphénol A, la glycérine, le triméthylolpropane, le pentaérythritol, le sorbitol avec des polyesters insaturés de di- et polyols aliphatiques, ainsi que leurs mélanges, les comonomères polyfonctionnels polymérisables par voie radicalaire du composant c) étant notamment choisis parmi : le divinylbenzène, le triméthacrylate de triméthylolpropane (TMPTMA), le triacrylate de triméthylolpropane, le diméthacrylate d'éthylène glycol, le diacrylate d'éthylène glycol, le di(méth)acrylate de butanediol-1,4 et leurs mélanges.

**7.** Compositions particulaires selon au moins l'une quelconque des revendications 1 à 6, **caractérisées en ce que** le comonomère fonctionnalisé du composant d) est choisi dans le groupe constitué par l'acide acrylique, l'acide méthacrylique, l'acide maléique, l'acide fumarique, l'acide itaconique, les (méth)acrylates à fonctionnalisation amino, tels que les esters aminoalkyliques primaires de l'acide (méth)acrylique, tels que le (méth)acrylate d'aminoéthyle, le (méth)acrylate d'aminopropyle et le (méth)acrylate d'aminobutyle, les esters aminoalkyliques secondaires de l'acide (méth)acrylique, notamment le (méth)acrylate de tert.-butylamino-alkyle en (C$_2$-C$_4$), l'acroléine, la N-vinyl-2-pyrrolidone, le N-vinylimidazole, la 2-vinylpyridine, la 4-vinylpyridine, la N-allyl-urée et la N-allyl-thiourée, les (méth)acrylamides, tels que le (méth)acrylamide, les (méth)acrylamides mono- ou di-N-substitués, les (méth)acrylates à fonctionnalisation hydroxy, tels que le méthacrylate d'hydroxyéthyle (HEMA), le (méth)acrylate d'hydroxypropyle, le (méth)acrylate d'hydroxybutyle, les (méth)acrylates de polyéthylène glycol, tels que le méthacrylate d'hydroxy- ou de méthoxypolyéthylène glycol, les (méth)acrylates de polypropylène glycol, le méthacrylate de stéaryle, les monomères à fonction époxy, tels que le (méth)acrylate de glycidyle, les mono- ou diesters d'acides dicarboxyliques α,β-insaturés, tels que les mono- ou diesters d'alkyle, de préférence d'alkyle en C$_1$-C$_{10}$, notamment d'éthyle, de n-propyle, d'iso-propyle, de n-butyle, de tert.-butyle, de n-pentyle ou de n-hexyle, d'alcoxyalkyle, de préférence d'alcoxyalkyle en C$_2$-C$_{12}$, de manière particulièrement préférée d'alcoxyalkyle en C$_3$-C$_8$, d'hydroxyalkyle, de préfé-rence d'hydroxyalkyle en C$_1$-C$_{12}$, de manière particulièrement préférée d'hydroxyalkyle en C$_2$-C$_8$, de cycloalkyle, de préférence de cycloalkyle en C$_5$-C$_{12}$, de manière particulièrement préférée de cycloalkyle en C$_6$-C$_{12}$, d'alkylcy-cloalkyle, de préférence d'alkylcycloalkyle en C$_6$-C$_{12}$, de manière particulièrement préférée d'alkylcycloalkyle en C$_7$-C$_{10}$, d'aryle, de préférence d'aryle en C$_6$-C$_{14}$, les diesters pouvant à chaque fois également être des esters mixtes, et leurs mélanges.

**8.** Compositions particulaires selon au moins l'une quelconque des revendications 1 à 7, **caractérisées en ce qu'**elles contiennent 0 à 20, de manière davantage préférée 0 à 15, de manière encore davantage préférée 1 à 10 % en poids d'un agent de séparation, par rapport à la composition.

**9.** Procédé de fabrication des compositions particulaires selon au moins l'une quelconque des revendications 1 à 8, **caractérisé en ce qu'**au moins les composants a) à d) sont soumis à une polymérisation en émulsion, puis séchés par pulvérisation éventuellement après l'ajout d'un agent de séparation.

**10.** Utilisation des compositions particulaires selon au moins l'une quelconque des revendications 1 à 8 en tant qu'additif dans des compositions duroplastiques, de préférence pour augmenter la résistance aux impacts.

**11.** Compositions duroplastiques contenant au moins :

A) une composition particulaire selon au moins l'une quelconque des revendications 1 à 8, et
B) un plastique duroplastique.

**12.** Procédé de fabrication de compositions duroplastiques selon la revendication 11, comprenant les étapes suivantes :

a) la dispersion de la composition particulaire selon au moins l'une quelconque des revendications 1 à 8 dans un ou plusieurs réactifs aptes à la formation du plastique duroplastique ou une solution de ceux-ci, qui contiennent éventuellement des additifs pour le plastique, notamment ceux qui sont avantageusement ajoutés avant la dispersion,
b) éventuellement l'ajout d'autres composants et
c) le durcissement de la dispersion obtenue.

**13.** Utilisation des compositions duroplastiques selon la revendication 11 en tant que corps moulé, en tant que revêtement ou matériau de liaison ou adhésif.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060079609 A
- CN 103421143
- EP 1674501 A
- WO 2009098305 A
- WO 2014174068 A
- JP 7316126 A
- JP 7316127 A
- JP 7316128 A
- GB 823823 A
- GB 823824 A
- DD 154702

**In der Beschreibung aufgeführte Nicht-Patentliteratur**

- Ullmann' s Encyclopedia of Industrial Chemistry. vol. 31, 345-355
- Ullmann' s Encyclopedia of Industrial Chemistry. vol. 13, 75-108
- *Rubber Chemistry and Technology,* 1976, vol. 49 (3), 610-49
- Molecular weight control of elastomers prepared by emulsion polymerization. **ÜRANECK, C. A.** Emulsion Polymerization, Theory and Practice. Applied Science Publishers Ltd, 1975, 329-381
- **W. HOFMANN.** *Rubber Chem. Technol.,* 1963, vol. 36, 1
- Kunststoff Taschenbuch. vol. 4.17
- Ullmann's Encyclopedia of Industrial Chemistry. vol. A26, 665
- **ULLMANN.** ENCYCLOPEDIA OF INDUSTRIAL CHEMISTRY. vol. 9, 547
- **ELIAS.** Makromoleküle. Technologie, vol. 2